# EUROPEAN PATENT APPLICATION

(11) **EP 1 351 454 A1**
(43) Date of publication of application: **08.10.2003**
(21) Application number: 02729572.4
(22) Date of filing: 15.01.2002
(51) Int. Cl.: H04L 12/56, G06F 13/00, H04N 7/173

(54) **COMMUNICATION DEVICE AND COMMUNICATION METHOD**

(30) Priority: 12.01.2001 JP 2001039208
(71) Applicant: Graphin Co., Ltd, Shinagawa-ku, Tokyo 140-0013 (JP)
(72) Inventor: KUROSAWA, Tomoaki, Shinagawa-ku, Tokyo 140-0013 (JP); MURAMATSU, Toshimichi, Shinagawa-ku, Tokyo 140-0013 (JP)
(74) Representative: Pratt, David Martin
(86) International application number: JP0200181
(87) International publication number: WO02056549

(57) **Abstract**

Upon receiving a transmit request REQ1 from a client apparatus (1), the server 11 transmits a group address INF1 to the client apparatus (1). The server 11 transmits block X1, which is the first block among blocks X1 through X4 resulting from subdividing the requested information, to a network 10 by specifying the group address INF1. If the server 11 receives a transmit request REQ2 from a client apparatus (2) after transmitting block X1 to the client apparatus (1), the server 11 transmits a group address INF2 to the client apparatus (2). The server 11 transmits to the network 10 the second through the fourth blocks, X2 through X4, by specifying group addresses INF1 and INF2. Furthermore, after the server 11 has transmitted the fourth block, block X4, the server 11 proceeds to transmit to the network 10 the block X1 by specifying the group address INF1, and finishes the transmission process.

## Description

### BACKGROUND OF THE INVENTION

### Technical Field

The present invention relates to information communication apparatus and methods for transmitting and receiving information such as data. More particularly, the present invention relates to client-server communication systems that transmit information from a server to a plurality of client apparatus via a network.

### Description of the Related Art

Known client-server communication systems connect a server with a plurality of client apparatus via a communication line (network), such as a LAN or the Internet. In this type of client-server communication system, designated information is sent from a server to a plurality of client apparatus.

Generally, if a large amount of information/data will be sent, such as image data or an image file, the quantity of transmitted data will be extremely large compared to a text file or other types of files. Moreover, the processing capacity of the server (for example, the quantity of data that can be sent at one time) and the processing capacity of the communication line (for example, the quantity of data that can be transferred at one time) are limited. Furthermore, even if the processing capacities of the server and the communication line are sufficient, no other data can be sent while a large quantity of data is being sent via the communication line until the transmission of that data is complete. Therefore, known client-server communication systems typically subdivide the information to be transmitted into a plurality of blocks and then transmit the plurality of blocks. For example, the server may subdivide the information to be transmitted into blocks of a specified data size. Then, the server transmits each subdivided block to the client apparatus via the communication line.

For example, the broadcast method and the unicast method are known methods for transmitting information in a network system.

The broadcast method is typically used to transmit information (such as data or a file) to a large number of unspecified apparatus connected to a network. In order to transmit information using the broadcast method, a specific address is used as the destination address for the information transmission to indicate the entire network. In the broadcast method, all apparatus connected via the network receive all information transmitted via the network. If the received information is relevant to the apparatus, the apparatus accepts the information; if irrelevant to the apparatus, the apparatus discards the information. Because the broadcast method places a heavy load on the network, it can only be used for certain applications. For example, in order to automatically acquire setting information from the server that is connected via the network, the broadcast method is used to locate the server that contains the setting information.

Setting information is a parameter that can be used for connecting to a server. Setting information may be used in a cable television (CATV) system, for example. A cable television system provides a large number of channels. Therefore, many cable television systems provide program channels. Programs being broadcast through individual channels at any given point in time are transmitted through these program channels. Therefore, by searching through the program channels, a user can identify the programs that are being broadcast at a preselected time. Setting information is similar to these program channels.

In order to obtain this setting information, a cable set-top box (client apparatus) is provided with information related to the server, such as the server's model and location. In the cable television system example above, at least two servers exist. One server provides the other server's information and uses the broadcast method. The other server provides data (images, sound files, or other useful data, etc.) and uses the unicast method.

On the other hand, the unicast method is typically used for transmitting information to a specific apparatus that is connected via the network. When transmitting information using the unicast method, the address of the specific apparatus is used as the destination address. In the unicast method, an apparatus connected via the network only receives the information, if the specific address for that specific apparatus is identified.

In addition, the multicast method is typically used to simultaneously transmit information to a specific group of client apparatus connected via the network. This specific group is also called a sub-network, because it denotes only a portion of the network. When transmitting information using the multicast method, an address that indicates a specific group (sub-network) is used as the destination address.

Further, the near-on-demand method is a known method that utilizes the multicast method.

In a client-server type network system, the unicast method, the multicast method and the near-on-demand method are used to transmit information (more specifically, information subdivided into blocks) from the server to client apparatus.

The operation will be described below of examples of transmitting information from a server to a plurality of client apparatus using the unicast method, the multicast method or the near-on-demand method.

These descriptions concern a typical network, i.e., a TCP/IP (Transmission Control Protocol/Internet Protocol) network, and the transmitted information may have any arbitrary structure and format.

### Unicast Method

The unicast method individually transmits information (data) from a server to each client apparatus. For example, if a plurality of client apparatus send a request to transmit the same information to the server, the server will individually transmit the requested information to each client apparatus that requested transmission of the designated information.

Thus, when information is transmitted from a server to a client apparatus using the unicast method, a 1:1 TCP connection (logic channel) is secured between the server and the client apparatus in order to reliably transmit the information. The server subdivides the information to be transmitted into a plurality of blocks of a specified size. Then, the server transmits the blocks sequentially from the first block via the secured TCP connection to each client apparatus. For example, if the information to be transmitted is subdivided into 4 blocks (i.e., X1, X2, X3 and X4), the server transmits each block in the order of X1, X2, X3 and X4 to each client apparatus.

The unicast method further utilizes a retransmission process in order to ensure the reliability of transmission of the information. For example, if the client apparatus detects an error in a received block, the client apparatus requests the server to retransmit the block in which the error occurred. When the server receives a retransmission request from the client apparatus, the server retransmits the requested block to the client apparatus.

Further, in the unicast method, the server transmits information via a secured connection to each client. Consequently, the server transmits different blocks within a certain time interval. For example, if information comprising blocks X1 to X4 will be transmitted, the server sequentially transmits each block in the order X1, X2, X3, X4 to the client apparatus that requested transmission of the information. Thus, within a certain time interval, the server transmits block X4 to client apparatus (1), block X3 to client apparatus (2), block X1 to client apparatus (3), and block X2 to client apparatus (4). In other words, the server transmits different blocks within a certain time interval.

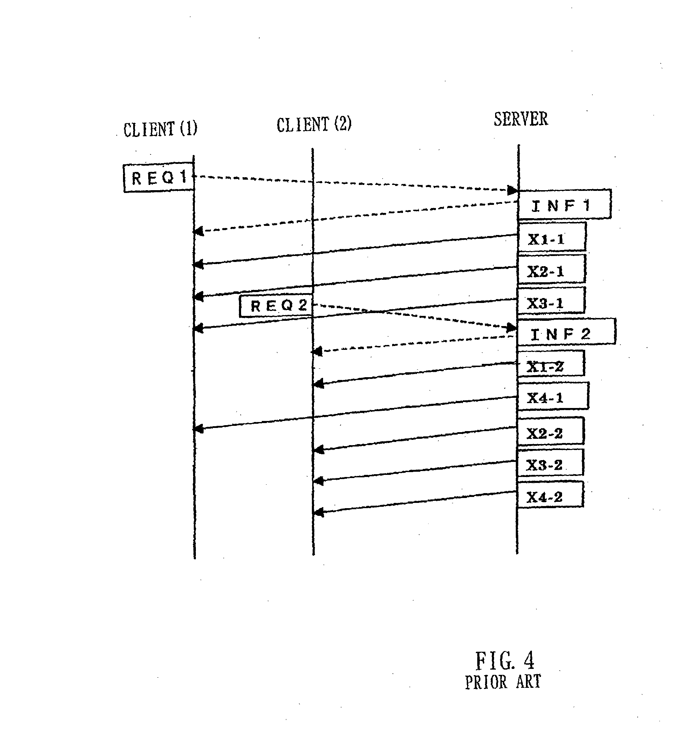

The operation for transmitting information from the server to the client apparatus using the unicast method will be described in further detail with reference to the sequence diagram shown in FIG. 4.

Client apparatus (1) sends a transmit request (dispatch request) for designated information REQ1 to the server. The server establishes a communication path (connection) with client apparatus (1) and then transmits the requested information in subdivided blocks (i.e., in the order of X1 to X4) to client apparatus (1). Blocks X1-1 to X4-1 indicate blocks X1 to X4 that are transmitted to client apparatus (1).

If the server receives transmit request REQ2 from client apparatus (2) while transmitting the information to client apparatus (1), the server will also begin to transmit information to client apparatus (2). For example, if the server receives a transmit request REQ2 from client apparatus (2) while transmitting block X3 (X3-1) to client apparatus (1), then at the next time interval, the server will transmit block X4 (X4-1) to client apparatus (1) and block X1 (X1-2) to client apparatus (2).

In this manner, the unicast method requires the server to individually transmit each block to each client. Consequently, as the number of transmit requests (dispatch requests) increases (in particular, the number of transmit requests until the time when the transmission of all blocks for one client apparatus is completed), the number of blocks that the server must transmit within a specific time interval also increases. For example, the condition will occur in which the server must transmit block X1 to client apparatus (1), block X2 to client apparatus (2), block X3 to client apparatus (3), and block X4 to the client apparatus (4).

As a further example, if the server is capable of transmitting a maximum of N blocks to a client apparatus per unit time and the server receives transmit requests from M number of client apparatus, the server will transmit (M × N) blocks via the network per unit time. In this case, if ( B ≧M × N) is not satisfied, wherein B is the number of blocks that the network can transfer per unit time (also known as the ""network bandwidth""), then it is not possible to transmit all the blocks to all client apparatus within the unit time. In other words, if the network bandwidth B is less than the number of blocks that the server is required to transmit per unit time (M × N), the server can not transmit blocks that exceed the network bandwidth B. In such cases, for example, the server either requires a new client apparatus to wait for the transmission of blocks to that client apparatus, or reduces the number of blocks that are transmitted to each client apparatus per unit time.

In the alternative, the server may read blocks from a storage device and then transmit the blocks to each client apparatus. In this case, there is a limit to the number of times that a server can read blocks from the storage device per unit time. In other words, the readable number limits the number of blocks that the server can transmit via the network. Therefore, even if the network has a relatively large network bandwidth, the number of client apparatus to which the same block can be transmitted within a certain time interval is limited by the processing capacity of the server.

Thus, in the unicast method, the network bandwidth of the network and/or the processing capacity of the server may limit the number of client apparatus to which information can be simultaneously transmitted.

### Multicast Method

In the multicast method, information can be simultaneously transmitted to many client apparatus (a specific group of client apparatus).

Moreover, the IP multicast method is one type of multicast method, in which the same information is simultaneously transmitted to a specific group (broadcast group) of apparatus within a TCP/IP network. In this method, a special address identifies the specified group and this address is known as a class D IP address.

In a TCP/IP network, the broadcast method can be used to simultaneously transmit information from the transmitting apparatus (e.g., the server) to all receiving apparatus (e.g., client apparatus) using a UDP (User Datagram Packet). The IP multicast method is thus a special type of broadcast method.

Further, the broadcast method transmits information (data) to the entire network. Any client apparatus that does not require the transmitted information will discard the transmitted information.

On the other hand, the IP multicast method transmits information (data) only to client apparatus that belong to the specified group. In other words, the IP multicast method uses a server that specifies a group address and sequentially transmits blocks. Even though the blocks are transmitted over the network, the client apparatus will only receive the blocks having the address that is identical to the client's own group address.

In the IP multicast method, it is not necessary to secure a connection, which is required in the unicast method. Therefore, the IP multicast method is a non-connection type communication method.

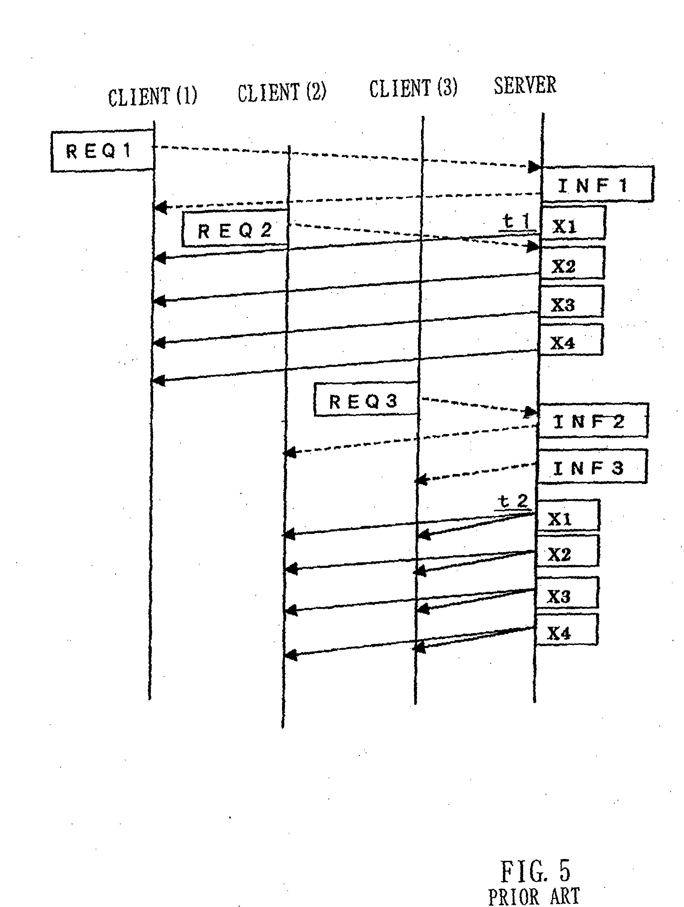

The operation for transmitting information from the server to the client apparatus using the IP multicast method will be described in further detail with reference to the sequence diagram shown in FIG. 5.

Prior to the transmit start time t1, client apparatus (1) sends a transmit request (dispatch request) REQ1 via the network, which requests the transmission of the information (data) provided in blocks X1 to X4. In response to receiving the transmit request REQ1 from client apparatus (1), the server transmits a group address INF1 via the network to client apparatus (1). In response to receiving group address INF1 sent from the server, client apparatus (1) stores the group address INF1 as the group address of the group to which it belongs.

At the transmit start time t1, the server sequentially transmits blocks X1 through X4 via the network. That is, blocks X1 through X4 are transmitted via the network in the sequence specified by the group address INF1. Client apparatus (1) receives the blocks having the address that is identical with its own group address INF1.

Prior to the next transmit start time t2, the server transmits the group address INF2 via the network to client apparatus (2) in response to receiving the transmit request REQ2 from client apparatus (2). In response to receiving the group address INF2 sent from the server, client apparatus (2) stores the group address INF2 as the group address of the group to which it belongs. Also, in response to receiving the request REQ3 sent from client apparatus (3), the server transmits the group address INF3 via the network to client apparatus (3). In response to receiving the group address INF3 sent from the server, client apparatus (3) stores the group address INF3 as the group address of the group to which it belongs.

At the transmit start time t2, the server sequentially transmits blocks X1 through X4 via the network. In other words, the group addresses INF2 and INF3 are specified for blocks X1 through X4 and then these blocks are sequentially transmitted via the network. Client apparatus (2) and client apparatus (3) receive those blocks having the specified group address that is identical their respective group address INF2 or INF3.

Therefore, in the IP multicast method, the server sequentially reads each block from the storage device, which specifies the group address, and then transmits the block of data via the network.

If the server is capable of transmitting a maximum of N blocks per unit time using the IP multicast method, the number of blocks transmitted via the network per unit time is N, regardless of the number of clients M. Consequently, the IP multicast method differs from the unicast method, because the number of blocks that can be received by each client per unit time does not change, even if the number of clients increases.

Further, according to the unicast method, the server verifies that the client apparatus has received a block, and then transmits the next block. However, in the IP multicast method, the server does not include a function for detecting whether there is a missing block on the network. Therefore, the client apparatus must be equipped with error processing functions, e.g., to detect the missing block and to retransmit the request for the missing block.

Moreover, as the amount of the error processing by the client apparatus increases, the number of blocks that must be transmitted from the server via the network also increases. In this case, the IP multicast method can not efficiently utilize the network bandwidth.

Furthermore, in the IP multicast method, the server begins to transmit information (blocks) at a specified transmit start time. Therefore, after sending a transmit request, the client apparatus must wait until the next transmit start time.

### Near-on-demand

The near-on-demand method provides n channels that can transmit information using the IP multicast method. Each channel begins to transmit information at a different start time. The server assigns the channel, which is available to receive the information the earliest, to the client apparatus. Therefore, the near-on-demand method reduces the time interval from the time when a client apparatus sends a transmit request until the time when the client apparatus receives the information.

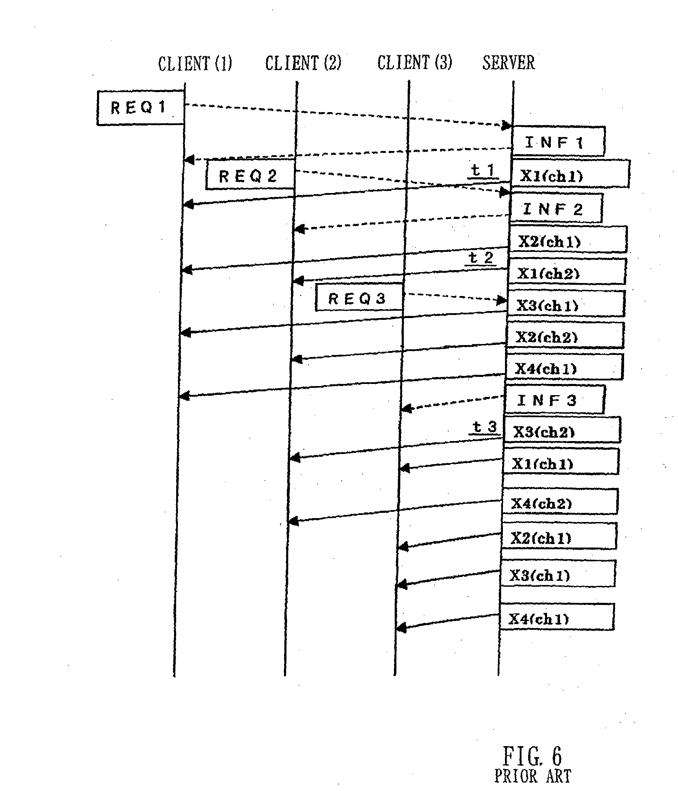

The operation for transmitting information from the server to the client apparatus using the near-on-demand method will be described in further detail with reference to the sequence diagram shown in FIG. 6. FIG. 6 shows 2 channels (chl and ch2) that are capable of transmitting information using the IP multicast method.

Prior to the transmit start time t1 for ch1, client apparatus (1) sends the transmit request (dispatch request) REQ1 via the network, thereby requesting the transmission of the information (data) included in blocks X1 through X4. In response to receiving the transmit request REQ1 from client apparatus (1), the server transmits the group address INF1 of ch1 via the network to client apparatus (1). Client apparatus (1) receives the group address INF1 of ch1 sent from the server and stores it as the group address of the group of ch1 to which it belongs.

At the transmit start time t1 for ch1, the server specifies blocks X1 through X4 with group address INF1 and then transmits the blocks in sequence over ch1. In this case, X1 (ch1) indicates block X1 that is transmitted over ch1. Client apparatus (1) receives the blocks transmitted over ch1 that have an address identical to its own group address INF1.

Prior to the transmit start time t2 for ch2, in response to receiving the transmit request REQ2 from client apparatus (2), the server transmits the group address INF2 of ch2 via the network to client apparatus (2). Client apparatus (2) receives the group address INF2 of ch2 sent from the server and stores INF2 as the group address of the group of ch2 to which it belongs.

At the transmit start time t2 for ch2, the server specifies blocks X1 through X4 with the group address INF2 and then transmits the blocks in sequence over ch2. Client apparatus (2) receives the blocks transmitted over ch2 that have an address identical to its own group address INF2.

Prior to the next transmit start time t3 for ch1, in response to receiving the transmit request REQ3 from client apparatus (3), the server transmits the group address INF3 of ch3 to client apparatus (3). Similarly thereafter, client apparatus (3) receives the blocks transmitted over ch1 that have an address identical to its own group address INF3.

If the server is capable of transmitting a maximum of N blocks over each channel on the network per unit time using the near-on-demand method, the maximum number of blocks that can be transmitted via the network per unit time is (n × N). Therefore, in the near-on-demand method, the transfer speed and the wait time until receiving the information depend on the number of channels. For example, if the number of channels n is increased, the wait time until receiving the information will decrease. However, the number of blocks that can be received per unit time also will decrease.

Moreover, similar to the IP multicast method, the client apparatus must be equipped with error processing functions, e.g., missing block detection and retransmission of the requested missing block.

The unicast method, IP multicast method and near-on-demand methods have the following advantages and disadvantages.

Because the IP multicast method and near-on-demand method transmit one block to a plurality of client apparatus, the transmission load on the server is relatively low. However, a large-capacity network must be provided, especially for the near-on-demand method. Moreover, it is necessary to consider error processing.

On the other hand, the unicast method provides highly reliable information transmission. However, as the number of client apparatus increases, a high capacity server and a network having a large network bandwidth become necessary.

In the unicast method, after receiving a transmit request from a client apparatus, the server begins to transmit the information to the client apparatus within as short a time interval as the server can accommodate.

However, in the IP multicast method, the server predetermines the time at which each block is transmitted. In other words, after sending a transmit request, the client apparatus must wait until the transmit start time for the transmission of the first block to begin.

The near-on-demand method using the IP multicast method thus provides a means for reducing the wait time. However, if many retransmit requests are transmitted during a certain time interval, the number of blocks transmitted per unit time via the network will increase.

The utilization of network bandwidth will be further described with numeric examples.

For example, if information (data) having 3,600 blocks is transmitted to 10 clients for 1 hour and the blocks are transmitted via the network at a rate of 1 block per second, the total number of transmitted blocks per hour is as follows.

Using the unicast method: 3600 ( 10 = 36,000 blocks.

Using the IP multicast method: 3,600 blocks.

Using the near-on-demand method with a 15 minute wait time (=4 channels): 14,400 blocks.

Using the near-on-demand method with a 30 minute wait time (=2 channels): 7,200 blocks

Using the near-on-demand method with a 1 minute wait time (=60 channels): 216,000 blocks

The near-on-demand method is the least effective for bandwidth utilization. Therefore, assuming the present state of communication network infrastructures, the near-on-demand method is impractical for use in information transmission, and implementation is difficult since it requires large startup costs.

Further, the unicast method utilizes the network bandwidth more efficiently than the near-on-demand method. However, the number of client apparatus for which transmit requests can be handled is limited by both bandwidth utilization factors and by the capacity of the server to read from the storage device.

The IP multicast method is the most advantageous from the viewpoint of bandwidth utilization. However, after sending a transmit request, the client must wait until the next transmit start time of the first block.

In addition, problems incurred in error processing for these three methods also must be considered. Because correction and retransmission are automatically preformed when errors occur in the unicast method, the reliability of information transmission is high. However, the IP multicast method and near-on-demand methods require error processing to be performed in addition to the normal block transmission processing.

### SUMMARY OF THE INVENTION

It is, accordingly, one object of the present teachings to provide information communication apparatus and methods that allow an information receiving apparatus (e.g., client apparatus) to receive designated information from an information transmitting apparatus (e.g., a server) within a shorter time.

In one aspect of the present teachings, a modified multicast method is utilized and the information transmitting apparatus may transmit the designated information to a plurality of information receiving apparatus only one time. As a result, the load on the information transmitting apparatus and on the network (communication line) is reduced. If a request to transmit the designated information is received from a second information receiving apparatus while transmitting blocks comprising the designated information from the information transmitting apparatus to a first information receiving apparatus, the transmission of the information to the second information receiving apparatus begins with a middle block. Consequently, because the second information receiving apparatus does not have to wait for the next transmit start time of the first block of the designated information, the second information receiving apparatus can receive the designated information within a shorter time.

In another aspect of the present teachings, if the information transmitting apparatus receives a request to transmit the designated information from a second information receiving apparatus while the information transmitting apparatus is transmitting the blocks comprising the designated information to the first information receiving apparatus using the multicast method, the information transmitting apparatus immediately transmits the blocks comprising the designated information to the first and second information receiving apparatus using the multicast method. At this time, the group address for the first information receiving apparatus and the group address for the second information receiving apparatus are specified for blocks that have not yet been transmitted to the first information receiving apparatus. Further, the group address for the second information receiving apparatus is specified for blocks that have already been transmitted to the first information receiving apparatus. Thus, because the block transmission to the second information receiving apparatus begins quickly, the wait time for the second information receiving apparatus is reduced.

In this case, subdivision sequence information is preferably appended to the blocks transmitted from the information transmitting apparatus. The information receiving apparatus can reconstitute the information by assembling the blocks based on the subdivision sequence information. Therefore, the process for decoding the designated information is simplified. Moreover, by using the subdivision sequence information, missing blocks can be easily identified.

In another aspect of the present teachings, the blocks are preferably cyclically transmitted in the predetermined sequence, as long as requests to transmit the designated information are being received from other information receiving apparatus prior to transmitting all blocks comprising the designated information to at least one information receiving apparatus. This simplifies the transmission of blocks by the information transmitting apparatus. In addition, the blocks are preferably stored in a storage device, and then the blocks are read in the predetermined sequence from the storage device.

In another aspect of the present teachings, the information transmitting apparatus may be configured to transmit blocks comprising information supplied from information supply device, such as an imaging apparatus, and a subdivision sequence information of each block. Therefore, the information receiving apparatus can receive information other than the information stored in the storage device.

In another aspect of the present teachings, the information transmitting apparatus may be configured to append error detection/correction information to each block. Thus, the information receiving apparatus can correct data errors in a received block and reconstitute the correct information.

In another aspect of the present teachings, the information transmitting apparatus may include a retransmission function in order to be able to reconstitute correct information, even if it is not possible to correct the data of the block or a block is missing. In such a case, the block transmission efficiency of the information transmitting apparatus is improved due to the use of a storage device for transmitting blocks of data, which stores blocks for transmitting, and the storage device for retransmission of the same blocks of data, which stores blocks for retransmission.

Moreover, when the retransmission is performed, a suitable re-transmission method is preferably selected based on the status of bandwidth utilization of the communication line (network). For example, the information transmitting apparatus may be configured to send blocks for retransmission using either the multicast method or the unicast method depending on the status of bandwidth utilization of the communication line. The status of bandwidth utilization of the communication line can be determined, for example, based upon the result of comparing a limit value with the number of blocks transmitted via the communication line or received from the communication line per unit time.

In another aspect of the present teachings, the information transmitting apparatus may be configured to regulate the number of blocks transmitted via the communication line. Thus, the quantity of data transmitted on the communication line within a predetermined time interval will not exceed a predetermined quantity. As a result, the load on the communication line can be suitably regulated and degradation of the transfer efficiency can be avoided.

In another aspect of the present teachings, the information transmitting apparatus may specify a group address of an information receiving apparatus when the information transmitting apparatus receives a transmit request from the information receiving apparatus. Thus, a plurality of information receiving apparatus can be divided into appropriate groups.

Of course, it is also possible to allocate group addresses to the information receiving apparatuses in advance. In this case, there is no need to transmit group addresses to the individual information receiving apparatuses.

In another aspect of the present teachings, the information transmitting apparatus may set the communication line to the information receiving apparatus when the information transmitting apparatus receives a transmit request from the information receiving apparatus. Thus, each block can be efficiently transmitted to the information reception apparatus and the load on the communication line can be reduced.

The group addresses allocated to client apparatuses can be the same as, or different from, each other. If identical group addresses are used, the information transmitting apparatus continues to transmit the blocks comprising the required information cyclically as long as the information transmitting apparatus continues to receive transmit requests from other information receiving apparatuses before transmitting all of the blocks comprising the required information to an information receiving apparatus. In this case, each information receiving apparatus must decide whether to receive these blocks. For example, based on the total number of blocks comprising the required information and the number of blocks received from the information transmitting apparatus, or the subdivision sequence information for individual blocks, the receiving apparatus decides whether to receive additional blocks. When identical group addresses are allocated to information receiving apparatuses, neither a group address allocation process nor a group address transmission process is required, and thus the load on the processing apparatuses is reduced.

Additionally, it is preferable to subdivide the required information into multiple blocks and each subdivided block into multiple segments. It is assumed that the blocks included in each segment can be transmitted cyclically. When the information transmitting apparatus receives a transmit request from an information receiving apparatus requesting the transmission of the required information starting with a certain segment, the information transmitting apparatus can extend the transmission of that segment if the requested segment is the same as that currently being transmitted. In contrast, if the requested segment is earlier in sequence than the segment currently being transmitted, the information transmitting apparatus transmits both the requested segment and the segment currently being transmitted simultaneously. In this way, the information receiving apparatus can receive the requested part of information within a short time.

Additional objects, features and advantages of the present invention will be readily understood after reading the following detailed description together with the accompanying drawings and the claims.

### BRIEF DESCRIPTION OF THE DRAWINGS

FIG. 1 is a sequence diagram of one representative method for transmitting designated information according to the present teachings.

FIG. 2 is a block diagram of a representative embodiment that can implement the representative method shown in FIG. 1.

FIG. 3 is a block diagram of another representative embodiment that can implement the representative method shown in FIG. 1.

FIG. 4 is a sequence diagram showing transmission of designated information using the known unicast method.

FIG. 5 is a sequence diagram showing transmission of designated information using the known multicast method.

FIG. 6 is a sequence diagram showing transmission of designated information using the known near-on demand method.

FIG. 7 is a block diagram of another representative embodiment that can implement the representative method shown in FIG. 1.

FIG. 8 is a sequence diagram showing another representative method according to the present teachings.

FIG. 9 is a flowchart showing a portion of the operation of the server shown in FIG. 2.

FIG. 10 is a flowchart showing another portion of the operation of the server shown in FIG. 2.

FIG. 11 is a flowchart showing a retransmission operation of the server shown in FIG. 2.

FIG. 12 is a block diagram of a representative server (information transmitting apparatus) according to the present teachings.

FIG. 13 is a diagram showing a portion of the operation of a representative information receiving apparatus according to the present teachings.

FIG. 14 is a diagram showing an example of the configuration of a block of data according to the present teachings.

FIG.s 15-17 are diagrams explaining the operation of a second embodiment of the communication method.

FIG. 18 is a sequence diagram explaining the operation of the second embodiment of the communication method.

FIG. 19 is a diagram explaining another operation of the second embodiment of the communication method.

FIG. 20 is a sequence diagram explaining another operation of the second embodiment of the communication method.

FIG. 21 is a diagram explaining the operation of the second embodiment of the communication method.

FIG. 22 is a diagram explaining the operation of the second embodiment of the communication method.

FIG. 23 is a diagram explaining another operation of the second embodiment of the communication method.

FIG. 24 is a diagram explaining the operation of the second embodiment of the communication method.

FIG. 25 is a diagram explaining the operation of a third embodiment of the communication method.

FIG. 26 is a diagram explaining the operation of a fourth embodiment of the communication method.

### DETAILED DESCRIPTION OF THE INVENTION

The unicast method and multicast methods are known methods for transmitting designated information from an information transmitting apparatus (e.g., a server) to a plurality of information receiving apparatus (e.g., client apparatus or devices).

If the known unicast method is used, the amount of information transmitted via the communication line increases in proportion to the number of information receiving apparatus. Therefore, as the number of information receiving apparatus increases, the wait time of the information receiving apparatus after sending a request to transmit the designated information until receiving the designated information becomes longer.

If the known multicast method is used, the information transmitting apparatus may send the designated information one time to a plurality of information receiving apparatus. Therefore, compared to the unicast method, less information is transmitted via the communication line (network) and the wait time is shorter.

However, when using the known multicast method, the information receiving apparatus must wait until the next transmit start time of the information, because the transmit start time for the information is fixed.

Therefore, one object of the present teachings is to reduce the wait time between sending a request to transmit designated information and receiving the designated information.

Thus, in one representative example, the known multicast method is modified to reduce the amount of designated information that is transmitted from the information transmitting apparatus via the communication line. Therefore, because the load of the information transmitting apparatus and on the communication line can be reduced, the wait time for the information receiving apparatus can be reduced. Further, if a request to transmit the designated information is received from a second information receiving apparatus while transmitting blocks subdivided from the designated information to a first information receiving apparatus, the information transmitting apparatus will begin to transmit blocks from a middle block to the second information receiving apparatus.

At this time, for blocks that have not yet been transmitted to the first information receiving apparatus, the information transmitting apparatus specifies a group address of the group affiliated with the first information receiving apparatus and a group address of the group affiliated with the second information receiving apparatus. Then, remaining blocks are transmitted with the group address of the first information receiving apparatus and the group address of the second information receiving apparatus. Moreover, for blocks that have already been transmitted to the first information receiving apparatus, the information transmitting apparatus only transmits those blocks with the group address of the second information receiving apparatus. Therefore, because the second information receiving apparatus can start to receive the blocks from a middle block, even while the information transmitting apparatus is transmitting blocks to the first information receiving apparatus, the wait time of the second information receiving apparatus is reduced.

For example, because the total number of blocks that comprise the designated information is known in advance, even if reception begins with a middle block, the information receiving apparatus can correctly reconstitute the designated information. In a representative embodiment of the present teachings, a block is transmitted together with its subdivision sequence information. In this case, the reconstituting process is simplified because the designated information can be reconstituted by simply assembling the blocks in the sequence specified by the subdivision sequence information appended to each block. Moreover, based on the subdivision sequence information, the information receiving apparatus can readily identify whether there are any missing blocks.

If the information transmitting apparatus begins to transmit to the second information receiving apparatus from a middle block, the information transmitting apparatus must transmit any remaining blocks to the second information receiving apparatus after transmitting all blocks to the first information receiving apparatus. In another representative embodiment of the present teachings, the information transmitting apparatus transmits blocks cyclically in a predetermined sequence, thereby simplifying the process for transmitting blocks by the information transmitting apparatus. In this case, the transmission process can be simplified by storing blocks in advance in a storage device and configuring the information transmitting apparatus to read the stored blocks in the predetermined sequence.

In another representative embodiment of the present teachings, the information transmitting apparatus can transmit blocks that have been subdivided from information supplied from information supply device, such as an imaging device. As a result, more types of information can be supplied to the information transmitting apparatus.

When transmitting blocks via the communication line, data within a block may drop out or change (e.g., be corrupted) during transmission via the communication line. In this case, the information receiving apparatus can not ordinarily reconstitute the correct information. In another representative embodiment of the present teachings, the information transmitting apparatus appends error detection/correction information to the blocks. Thus, the information receiving apparatus can detect and correct data errors based on the error detection/correction information included in the received block. If subdivision sequence information is also appended to the block, the information receiving apparatus can identify that a block has been incorrectly received (e.g., a subdivision sequence information is missing).

If data is missing from a received block or if a block is entirely missing, the information receiving apparatus must receive that block again from the information transmitting apparatus. In another representative embodiment of the present teachings, a retransmit function is provided for these types of situations. For example, the information receiving apparatus may send a request to retransmit the blocks with the missing data or missing blocks to the information transmitting apparatus. The information transmitting apparatus sends the requested block in order to retransmit or send all information blocks (e.g., including the missing block) to the information receiving apparatus that sent the retransmit request.

In another representative embodiment of the present teachings, a first storage device may be provided to store blocks for transmission and a second storage device may store blocks for re-transmission. The first and second storage devices may be combined (or integrated) or may be separate. Thus, in this embodiment, when transmitting a block of information, the information transmitting apparatus can send a block stored in the first storage device for transmitting. Further, when re-transmitting a block, the information transmitting apparatus can send a block stored in the second storage device for re-transmission. Thus, the transmitting process using the information transmitting apparatus can be simplified.

When re-transmitting a block, a suitable retransmission method is preferably selected based upon the usage status (e.g., the quantity of data) of the communication line. In another representative embodiment of the present teachings, the information transmitting apparatus may transmit data using the multicast method when a relatively large quantity of data is being transmitted via the communication line. Further, the unicast method may be used when a relatively small quantity of data is being transmitted via the communication line. The usage status of the communication line may be determined, e.g., based on the result of comparing the number of blocks currently being transmitted via the communication line (network) to a limit value.

If a relatively large quantity of data (load) is on the communication line, the data transfer efficiency may deteriorate. Thus, in another representative embodiment of the present teachings, the information transmitting apparatus may regulate the number of blocks transmitted via the communication line. In this case, the quantity of data on the communication line within a predetermined time interval does not exceed a predetermined quantity. As a result, the load on the communication line can be suitably regulated.

The group address of the information receiving apparatus may be set in advance, or may be set each time when information is transmitted. In another representative embodiment of the present teachings, when a transmit request is received from information receiving apparatus, the information transmitting apparatus sets the group address for the information receiving apparatus, and transmits the information with the group address to the information receiving apparatus. Thus, the information receiving apparatus that sent the request to transmit the designated information can be divided into appropriate groups.

When transmitting blocks from the information transmitting apparatus, blocks may be transmitted to all communication lines. However, the communication line is preferably arranged such that the blocks are transmitted to a specific area. In another representative embodiment of the present teachings, when a transmit request is received from the information receiving apparatus, the information transmitting apparatus identifies the area of the information receiving apparatus, and then sets the communication line so that blocks can reach the area. In this case, because blocks are not transmitted to unnecessary communication lines, the load on the communication line (network) decreases and blocks can be efficiently transmitted to the information receiving apparatus.

If using the download methodthat plays back data after all of the information has been received, the time required for receiving information is substantially the same regardless of the blocks comprising the required information with which the transmission starts.

However, if the streaming method, which plays back data while receiving the required part of the information, is used, the receiving start time for the required part or the receiving interval for the next part should be shortened. In another preferred embodiment of the present invention, the required information is subdivided into multiple blocks, and these subdivided blocks are grouped into multiple segments. The blocks comprising each segment can be transmitted cyclically.

Therefore, when the information transmitting apparatus receives a transmit request from one of the information receiving apparatuses requesting the transmission of the required information starting with a certain segment, the information transmitting apparatus extends the transmission of that segment if the requested segment is the same as that currently being transmitted. In contrast, if the requested segment is earlier in sequence than the segment currently being transmitted, the information transmitting apparatus transmits the requested segment while also transmitting the segment currently being transmitted. Since these segments are transmitted using the multicast method, the information receiving apparatuses can receive the requested parts of the information within a short time without increasing the processing load on the information transmitting apparatuses or the load on the communication line.

Each of the additional features and method steps disclosed above and below may be utilized separately or in conjunction with other features and method steps to provide improved information communication apparatus and methods. Representative examples of the present invention, which examples utilize many of these additional features and method steps in conjunction, will now be described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the following detail description may not be necessary to practice the invention in the broadest sense, and are instead taught merely to particularly describe representative examples of the invention. Moreover, various features of the representative examples and dependent claims may be combined in ways that are not specifically enumerated in order to provide additional useful embodiments of the present teachings.

Here, various methods can be used for playing back the information (data) that is transmitted to the information receiving apparatuses from the information transmitting apparatus. For example, the download method or the streaming method can be used.

In the download method, all parts of the information (all blocks comprising the information) are transmitted to the information receiving apparatus from the information transmitting apparatus and are stored in the storage device of the information receiving apparatus. Then, the information receiving apparatus reads the information stored in its storage device and plays it back.

In the streaming method, only the necessary parts of the information, rather than all parts of the information, are transmitted to the information receiving apparatus from the information transmitting apparatus and are stored in the storage device of the information receiving apparatus. While playing back the parts stored in its storage device, the information receiving apparatus receives the next part (by reading ahead and receiving it), which is then stored in the storage device. For example, to play back video information starting at a beginning of the video information, the information transmitting apparatus transmits the video information sequentially starting with the beginning to the information receiving apparatus, and the information receiving apparatus sequentially plays back the received parts. The streaming method also enables playback starting in a middle of the information by transmitting the information starting in the middle. Furthermore, by transmitting only the desired parts, it is possible to play back the desired parts only. Note that when the information receiving apparatus finishes playing back the received parts, the information receiving apparatus can discard the received parts.

Conventionally, for transmitting information from an information transmitting apparatus to an information receiving apparatus, the unicast method is often used to ensure reliability. When transmitting information using the unicast method, the time between the issuance of a transmit request by the information receiving apparatus and the receipt of the information (the wait time) depends on the capabilities of the information transmitting apparatus and the network (communication line). For example, as the number of information receiving apparatuses that request the transmission of the same information increases, the time that elapses before the information receiving apparatuses receive the information (the wait time) also increases.

When information is being played back using the streaming method, the receipt of the next part that follows the part being played back by the information receiving apparatus may arrive too late if the wait time becomes long. In this case, the playback of the information by the information receiving apparatus is interrupted. To avoid this problem, a method can be considered that increases the volume of data to be transmitted from the information transmitting apparatus to the information receiving apparatus. However, using such a method decreases the number of information receiving apparatuses that can simultaneously receive information from the information transmitting apparatus.

The use of the communication method and communication apparatus according to the present invention can shorten the wait time for information receiving apparatuses regardless of the type of playback method used without increasing the capacity of the information transmitting apparatus or communication line.

The communication method in the second embodiment explained below is ideal for playing back information using the streaming method.

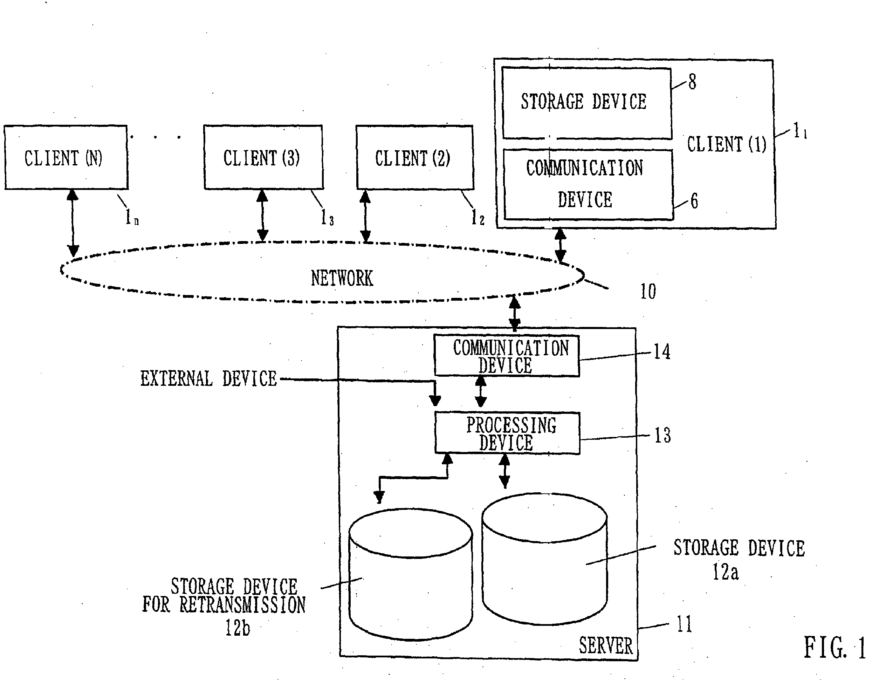

FIG. 1 shows a block diagram of a representative embodiment of one type of information communication apparatus according to the present teachings. A client-server type communication system is exemplified for transmitting designated information from a server to at least one client apparatus via a network.

The client-server type communication system may include a plurality of client apparatus (1 to n), a server 11 and a network 10. In this embodiment, the network 10 preferably uses the TCP/IP protocol, such as is used for the Internet, a LAN, a WAN or CATV.

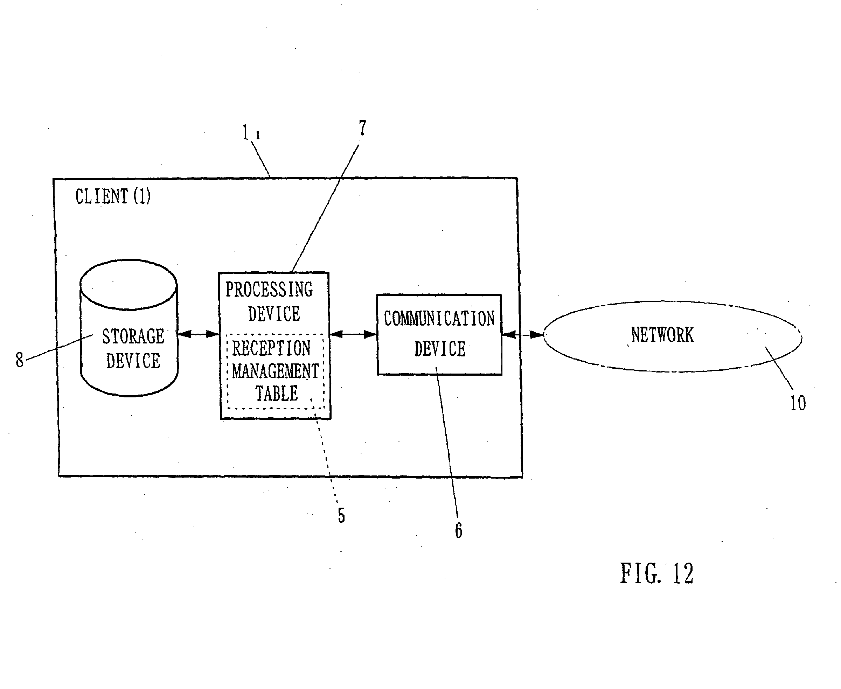

As shown in FIG. 12, each client apparatus (1 to n) may include, e.g., a communication device 6, a storage device 8, a processing device (CPU) 7 and a display (not shown). The processing device 7 communicates with the server via the network 10 using the communication device 6. The processing device 7 also performs various types of processing. For example, the processing device 7 may send a transmit request, receive and store the blocks in the storage device 8, detect errors (such as missing data in a received block or a missing block) and send a retransmit request, and receive retransmitted blocks and store the blocks in the storage device 8.

Representative client apparatus (1 to n) include personal computers and set top boxes (STB). A receiving management table 5 may be utilized to manage the received blocks. Although the receiving management table 5 is located in the processing device 7 shown in Fig. 12, it may also be located in the storage device 8.

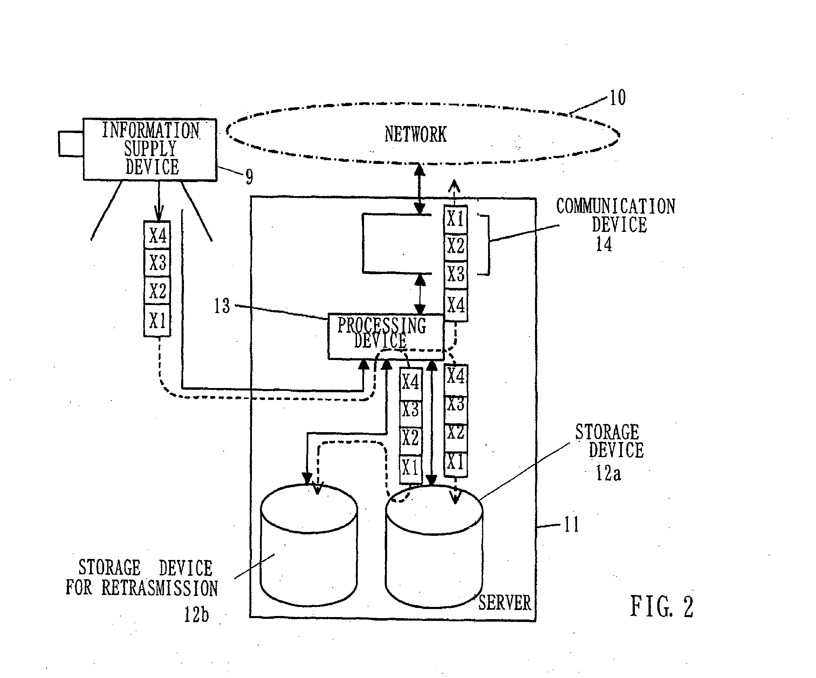

Referring back to FIG. 2, the server 11 preferably includes a first storage device (storage device for transmitting) 12a, a second storage device (storage device for re-transmissions) 12b, a processing device (CPU) 13 and a communication device 14. The processing device 13 preferably communicates with each client apparatus (1 to n) via the network 10 using the communication device 14. The processing device 14 also performs various types of processing. For example, the processing device 14 may direct storage of information supplied from an external device (for example, an imaging device) in the first storage device for transmitting 12a. Further, the processing device 14 may read blocks of requested information that were transmitted from the external device or from the first storage device 12a and then transmit the blocks to the particular client apparatus (1 to n) that sent the transmit request. In addition, the processing device 14 may read requested blocks that will be retransmitted from the second storage apparatus for retransmission 12b and then retransmit the blocks to the particular client apparatus (1 to n) that sent the retransmit request.

Depending on the application of the present teachings (e.g., the number of client apparatus or other such factors), a large-scale general purpose computer, mini-computer, workstation, personal computer, etc. May be used as the server 11. In the alternative, a dedicated server, such as a UNIX server, may be used as the server 11.

In addition, the first storage device for transmitting 12a and the second storage device for re-transmission 12b may be a single, dual-purpose storage device. Further, although FIG. 2 shows a single server 11, a plurality of servers may be utilized.

According to the present teachings, the server 11 provides one representative example of an "information transmitting apparatus" and the client apparatus (1 to n) provide one representative example of an "information receiving apparatus."

A representative method for transmitting the designated information (data) from the server 11 to client apparatus (1 to n) will now be described with reference to FIG. 2.

For example, the information is preferably subdivided into a plurality of blocks or is regarded as being subdivided into a plurality of blocks. In this representative example, the designated information is subdivided into 4 blocks: X1, X2, X3 and X4. Moreover, the designated information can be later reconstituted by assembling blocks X1 to X4 in the sequence of X1, X2, X3, X4.

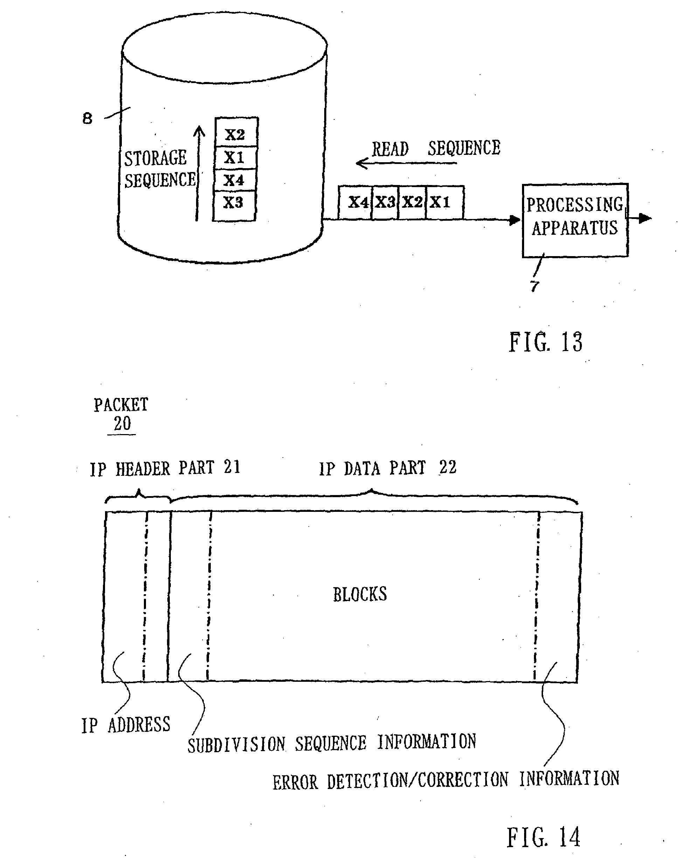

The subdivided blocks may be, e.g., transmitted in packets. FIG. 14 shows a representative configuration for such packets. Thus, packet 20 may include an IP header portion 21 and an IP data portion 22.

An IP address may be inserted into the IP header portion 21 in order to indicate the transmission destination of the packet 20. A group address that indicates a specific group (sub-network) may be set, for example, as the IP address.

IP data portion 22 may include, for example, subdivision sequence information, a block of data (subdivided from the designated information) and error detection/correction information. The subdivision sequence information preferably indicates which block within the sequence has been inserted into IP data portion 22. The block transmit sequence and the block assembly sequence are determined based on the subdivision sequence information. In addition, missing blocks can also be detected based on the subdivision sequence information. Error detection for the data inserted into the IP data portion 22 and error correction (in the case of a few errors) can be performed based on the error detection/correction information.

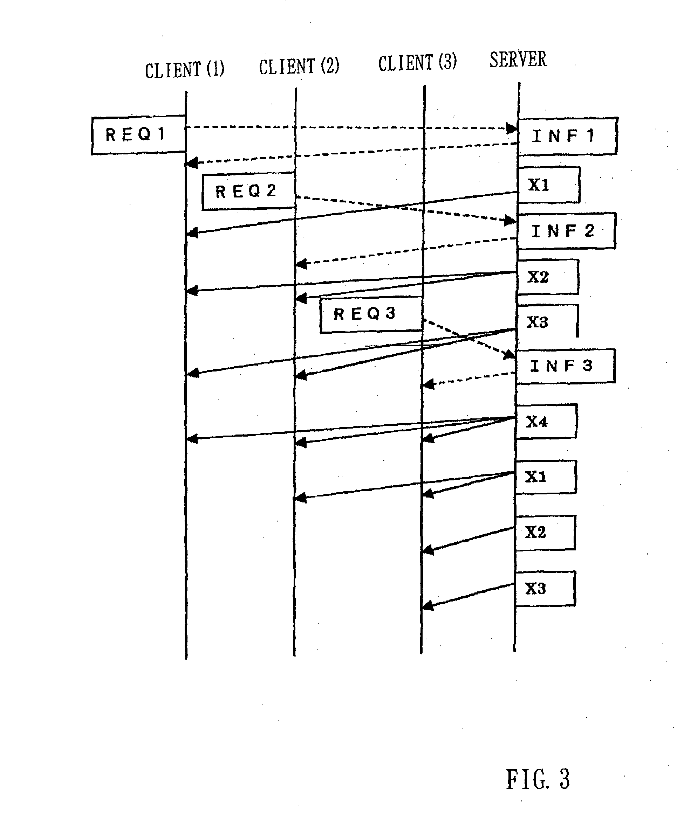

The processing device 13 preferably subdivides information that is supplied from an external device (e.g., an imaging device) or from an input device (e.g., a reading device that can read information stored in a storage medium) into blocks having a specific size (X1 to X4 in this embodiment). The blocks are then stored in the first storage device (storage device for transmitting) 12a. For example, as shown in FIG. 3, the processing device 13 preferably subdivides the information supplied from the information supply device 9 into blocks X1 to X4, and then stores the subdivided blocks X1 to X4 in the first storage device 12a. At this time, the sequence of blocks X1 to X4 is stored in an identifiable order. For example, the subdivision sequence information may also be stored in first storage device 12a. Alternatively, the blocks are stored in first storage device 12a in a fixed sequence.

In addition, the processing device 13 also preferably transmits blocks X1 to X4 of information supplied from an external device, or blocks X1 to X4 stored in. the first storage device 12a, via the network 10. The processing device 13 also preferably processes the storage of blocks X1 to X4 in the second storage device for re-transmission 12b.

A representative method for transmitting information (blocks) stored in the first storage device 12a from the server 11 in response to transmit requests from client apparatus (1) to (3) will now be described with reference to FIG. 3.

While the server 11 is in its initial state, a transmit request (dispatch request) REQ1, which requests transmission of certain designated information, is sent from client apparatus (1) to the server 11 via the network 10. In FIG. 1, transmissions that utilize the unicast method are indicated with broken lines having directional arrows.

In response to receiving a transmit request REQ1 from client apparatus (1), the server 11 (specifically, processing device 13) prepares to transmit using the multicast method. In particular, blocks X1 to X4 are preferably subdivided from the designated information. In other words, a group address is transmitted to client apparatus (1). This group address is necessary for receiving blocks X1 to X4, which are transmitted using the IP multicast method from the server 11. In this embodiment, group address INF1 is transmitted using the unicast method to client apparatus (1) that sent the transmit request REQ1. Further, a class D address is preferably selected from the IP addresses used in a TCP/IP communication system and is used as the address for group address INF1. A class D address is a special address that identifies the specified group.

Client apparatus (1) receives the group address INF1, which was transmitted from the server 11, and stores the received group address in the storage device 8 as the address of its own affiliated group.

The server 11 then transmits to client apparatus (1) the total number (total count) of blocks (e.g., X1 to X4) that comprise the designated information. In this representative example, the server 11 notifies client apparatus (1) that a total of 4 blocks of information (data) will be transmitted. The data concerning the total number of blocks may be transmitted together with the group address INF1 or may be transmitted with each block. Client apparatus (1) stores the data concerning the total number of blocks in the receiving management table 5.

Next, the server 11 reads block X1, which is the first block of the designated information, from the first storage device 12a. Then, a group address INF1 is specified and block X1 is transmitted via the network 10 by the communication device 14 using the multicast method. In FIG. 1, transmissions using the multicast method are indicated with solid lines having directional arrows.

When client apparatus (1) receives block X1 from the network 10, which block X1 includes the group address identified as its own group address INF1, client apparatus (1) stores block X1 in the storage device 8. At this time, client apparatus (1) also stores management information in the receiving management table 5. For example, the management information may include, e.g., the total number of blocks comprising the designated information, the identifying information that indicates the designated information, the subdivision sequence information of block X1 and/or the subdivision sequence information of an incorrectly received block. When the subdivision sequence information of an incorrectly received block is stored in the receiving management table 5 (see FIG. 12), a retransmit request (described further below) is sent to the server 11.

Before transmitting all blocks (X1 to X4) from the server 11 to client apparatus (1), for example during transmission of block X1, the server 11 may receive a transmit request REQ2 from client apparatus (2).

In this case, the server 11 can use the unicast method to transmit the group address INF2 to client apparatus (2). At this time, in some cases, the same group address INF1 as client apparatus (1) is sent to client apparatus (2).

Client apparatus (2) receives the group address INF2 transmitted from the server 11 and stores the group address INF2 in the storage device 8 as the group address of its own group.

The server 11 then reads block X2 from the first storage device 12a, which is the next sequential block after X1, and uses the IP multicast method to transmit block X2 via the network 10. At this time, the server 11 specifies group addresses INF1 and INF2 for block X2. In other words, regardless of whether block X2 will be sent to a plurality of client apparatus, the server 11 uses the IP multicast method to transmit a single block X2 via the network 10.

When client apparatus (1) receives block X2 from the network 10, which block X2 includes the group address that is identical to its own group address INF1, client apparatus (1) stores block X2 in the storage device 8. Also, when client apparatus (2) receives block X2, which block X2 includes the group address that is identical to its own group address INF2, client apparatus (2) stores block X2 in its storage device 8.

Similarly, the server 11 reads block X3 from the first storage device 12a, which is the next sequential block after block X2, specifies group addresses INF1 and INF2 and then transmits block X2 via the network 10 by the communication device 14.

When client apparatus (1) and client apparatus (2) receive block X3 from the network 10, which block X3 includes the group addresses that are identical to their own group addresses INF1 or INF2, client apparatus (1) and client apparatus (2) store block X3 in their respective storage devices 8.

Moreover, while block X3 is being transmitted from the server 11, the server 11 may receive a transmit request REQ3 from client apparatus (3).

In this case, the server 11 can use the IP multicast method to transmit a group address INF3 to client apparatus (3).

When client apparatus (3) receives the group address INF3 that was sent from the server 11, client apparatus (3) stores the group address INF3 in its storage device 8 as its own group address.

The server 11 then reads block X4 from the first storage device 12a, which is the next sequential block after block X3, and specifies group addresses INF1, INF2 and INF3. Then, the server 11 uses the IP multicast method to transmit block X4 via the network 10.

Client apparatus (1) to (3) receive block X4, which block X4 includes the group addresses that are identical to their own group addresses INF1, INF2 and INF3, and store block X4 in their respective storage devices 8.

At this time, the server 11 has completed the transmission of the designated information (blocks X1 to X4) to client apparatus (1). However, the transmission of the designated information (blocks X1 to X4) to client apparatus (2) and (3) has not yet been completed. Therefore, after transmitting block X4 specified with group addresses INF1, INF2 and INF3 using the multicast method, the server 11 continues transmitting blocks X1, X2 and X3. In other words, the server 11 specifies group addresses INF2 and INF3 for block X1 and then transmits block X1 via the network 10. Then, the server 11 specifies a group address INF3 for blocks X2 and X3 and transmits block X2 and X3 via the network 10.

As shown in the sequence diagram of FIG. 1, client apparatus (1) receives the designated information in the sequence of blocks X1, X2, X3, X4; client apparatus (2) receives the designated information in the sequence of blocks X2, X3, X4, X1; and, client apparatus (3) receives the designated information in the sequence of blocks X4, X1, X2, X3.

Further, the server 11 transmits packet 20, into which blocks X1 to X4 and the subdivision sequence information for each block have been inserted as shown in FIG. 14. Thus, each client apparatus (1) to (3) can use any appropriate method for storing each received block X1 to X4 in their respective storage devices 8. For example, as shown in FIG. 13, each block X1 to X4 can be stored in the storage device 8 in the sequence that it was received. In FIG. 13, blocks X1 to X4 are received in the sequence of X3, X4, X1, X2, and are stored in the storage device 8 in the received order. In this case, the processing device 7 of the client apparatus reads blocks X1 to X4 stored in the storage device 8 with reference to the subdivision sequence information of each block X1 to X4. Moreover, the processing device 7 reconstitutes the designated information by re-combining blocks X1 to X4 with reference to the subdivision sequence information of each block. Of course, the received blocks X1 to X4 can also be stored in the storage device 8 according to the subdivision sequence information of each block.

As described above, while the server 11 is transmitting the designated information (blocks) to one or more client apparatus, the server 11 will repeatedly transmit blocks X1 to X4 in a fixed sequence (playback sequence) via the network 10 using the multicast method, as long as requests to transmit the information continue to be sent from other client apparatus.

When the server 11 receives a transmit request from one or more client apparatus in its initial state, the server 11 will begin to transmit the plurality of blocks that comprise the designated information (data) in sequence starting from the first block. Moreover, prior to completing the transmission of the designated information (blocks that comprise the designated information) to the client apparatus that sent the transmit request, the server 11 will start to transmit the blocks to other client apparatus in sequence starting with the block being transmitted at that time, if the server 11 receives a request to transmit the information from another client apparatus (either from a single apparatus or a plurality of apparatus).

Note that the group addresses to be transmitted to client apparatuses can be the same as, or different from, each other. An explanation will be provided below with examples of operations by the server and individual client apparatuses when the same group address is transmitted to multiple client apparatuses.

For example, when the server is in a standby state and receives a transmit request for the required information from the first client apparatus, the server transmits a predetermined group address to the first client apparatus. Then, the server transmits the blocks comprising the required information according to a predetermined sequence by specifying the predetermined group address.

If the server receives a transmit request for the required information from a second client apparatus before completing the transmission of all of the blocks comprising the required information to the first client apparatus, the server transmits a predetermined group address to the second client apparatus. Then, the server cyclically transmits the blocks comprising the required information according to a predetermined sequence by specifying the predetermined group address until all of the blocks comprising the required information have been transmitted to the second client apparatus.

Meanwhile, the first and second client apparatuses execute receiving processes to receive the necessary blocks from among those being transmitted to the network. For example, based on the total number of blocks comprising the required information included in block packets and the number of blocks received (or the subdivision sequence information for the received blocks), the receiving apparatus decides whether all of the blocks comprising the required information have been received. Upon determining that all of the blocks comprising the required information have been received, the receiving apparatus stops receiving blocks.

Even when the same group address is transmitted to individual client apparatuses, the server in this embodiment continues to cyclically transmit the blocks comprising the required information as long as the server continues to receive transmit requests for the required information. Therefore, each client apparatus can start receiving the blocks comprising the required information immediately after sending a transmit request. During this step, the processing load on the server or the load on the network (communication line) does not increase because the blocks are transmitted using the multicast method.

In the aforementioned embodiment, a group address is transmitted to each client apparatus when a transmit request is sent from each client apparatus. However, it is also possible to allocate group addresses to the individual client apparatuses in advance. The group addresses to be allocated to the individual client apparatuses in advance can be the same as, or different from, each other. In this case, no need exists for the server to transmit group addresses to the individual client apparatuses.

When transmitting blocks X1 to X4 from the server 11 via the network 10 using the multicast method, setting of network 10 is not performed. Therefore, blocks X1 to X4 are transmitted from the server 11 using the multicast method and are transferred to all areas of the network 10. Therefore, as the area of the network 10 becomes broader, the transfer efficiency deteriorates and the quantity of data on the network increases.

Thus, the network 10 is preferably set such that blocks X1 to X4, which are transmitted from the server 11 using the multicast method, will efficiently reach the client apparatus that sent the transmit request. For example, in response to receiving a transmit request REQ1 from client apparatus (1), the server 11 sets the network 10 such that blocks X1 to X4 will reach the group that includes the client apparatus (1) that sent the transmit request REQ1. That is, the server 11 sends to the router in the network 10 the required information for transmitting blocks X1 to X4 to client apparatus (1) using the IP multicast method. This information is used to set the network 10 so that client apparatus (1) can receive blocks from the router in the network 10, when blocks X1 to X4 are transmitted from the server 11 via the network 10 using the IP multicast method.

In this specification, the required information (for example, the network setting information and the group addresses INF1 to INF3) for receiving information transmitted using the IP multicast method may be referred to as "required transmitting information" or "required receiving information."

If information (blocks of data) is transmitted using the IP multicast method to a class D IP address (group address), it is not necessary for the server 11 to specify the IP addresses for individual client apparatus when transmitting the information. In other words, the server 11 may specify the group address and transmit blocks via the network 10 one time. In this case, a plurality of client apparatus affiliated with the group specified by the group address can receive the block transmitted via the network 10. Of course, each node (not shown) and each router (not shown) in the network 10 must be adapted to use the IP multicast method.

Further, the first storage device 12a, which stores information (blocks X1 to X4), may be provided internally within the server 11, or may be provided externally to the server 11. If the information (blocks X1 to X4) is stored in a first storage device 12a that is provided internally in the server 11, it is preferable to store blocks X1 to X4 subdivided from the information and the subdivision sequence information.

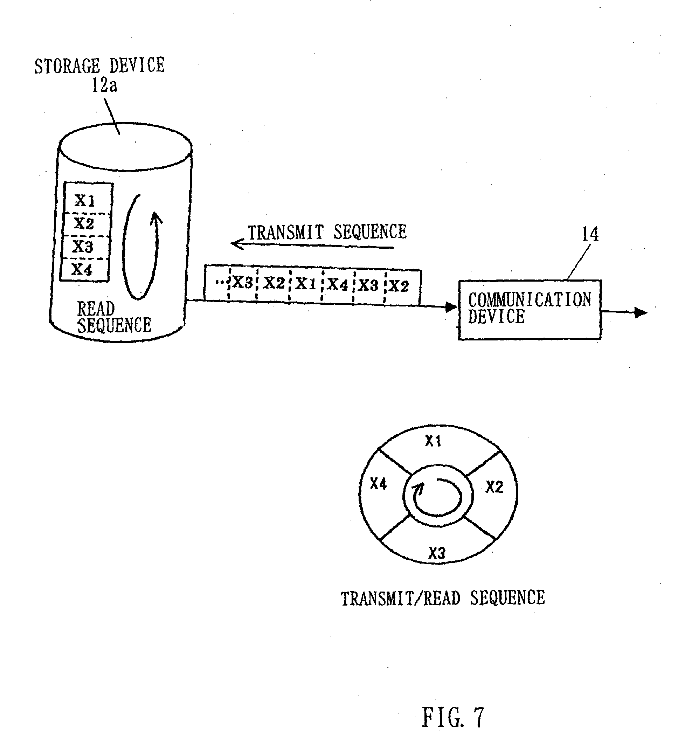

FIG. 7 shows a representative method for operating the server 11 of this representative embodiment in order to transmit designated information (blocks).

Blocks X1 to X4, which comprise the designated information (data), are stored in the sequence of X1, X2, X3, X4 in the first storage device (storage device for transmitting) 12a of the server 11. The processing device 13 (see FIG. 2) reads blocks X1 to X4 from the first storage device 12a in the specified sequence. For example, the processing device 13 reads block X1 first, block X2 second, block X3 third, and block X4 fourth. Then, returning to the top of the block sequence, the processing device 13 reads block X1 fifth. Thus, the processing device 13 continues to cyclically read blocks X1 to X4. Blocks X1 to X4 read from the storage device 12a are sent to the communication device 14. The communication device 14 transmits blocks X1 to X4 via the network 10. The transmitting sequence for blocks X1 to X4 may be X1, X2, X3, X4, X1, X2, etc.

While transmitting the information from the server 11, the server 11 continues the cyclic transmitting operation in the specified sequence shown in FIG. 7, as long as the server 11 continues to receive requests to transmit the information (data) from one or more client apparatus.

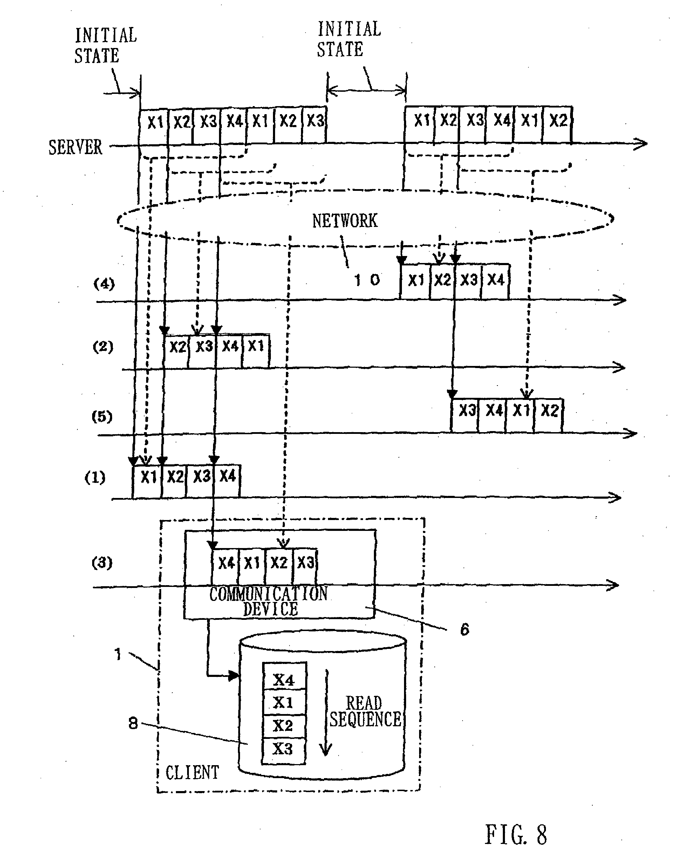

FIG. 8 shows in further detail a sequence diagram describing a representative operation for sending requests to transmit the designated information.

The server 11 is in its initial state when it has not received transmit requests from the client apparatus and is not transmitting information (blocks of data).

When the server 11 receives a transmit request from client apparatus (1) in its initial state, the server 11 reads blocks X1 to X4, which comprise the requested information (data), from the first storage device 12a starting with the leading block in the block sequence. Then, the server 11 sequentially transmits blocks X1 to X4 via the network 10 using the multicast method. In other words, in response to receiving the transmit request from client apparatus (1), the server 11 starts transmitting blocks X1 to X4, which contain the designated information requested to be transmitted.

While blocks X1 to X4 are being transmitted to client apparatus (1), the server 11 will transmit the next sequential block to client apparatus (1) and to another client apparatus that has sent a transmit request, if the server 11 receives a request to transmit the designated information sent from another client apparatus.

For example, while transmitting block X1 to the group affiliated with client apparatus (1), the server 11 will transmit the next block X2 to the group of the client apparatus affiliated with client apparatus (1) and (2), if the server 11 receives a transmit request from client apparatus (2). Moreover, while transmitting the next block X3 to the group of the client apparatus affiliated with client apparatus (1) and (2), the server 11 will transmit the next block X4 to the group of the client apparatus affiliated with client apparatus (1), (2), and (3), if the server 11 also receives a transmit request from client apparatus (3).

In summary, when blocks X1 to X4 comprising the designated information form the sequence X1, X2, X3, X4, the sequence of blocks transmitted from the server 11 via the network 10 using the IP multicast method will be X1, X2, X3, X4, X1, X2, X3, X4, etc. While transmitting the designated information (blocks), this cycle (i.e., X1, X2, X3, X4) will be repeated as long as the server 11 continues to receive requests to transmit the designated information.

In the embodiment shown in FIG. 8, client apparatus (1) and the client apparatus (4) receive blocks in the sequence of X1, X2, X3, X4; client apparatus (2) receives blocks in the sequence of X2, X3, X4, X1; client apparatus (3) receives blocks in the sequence of X4, X1, X2, X3; and, client apparatus (5) receives blocks in the sequence of X3, X4, X1, X2.

A representative method for transmitting information (blocks) stored in the first storage device 12a was described above. Therefore, a representative method for supplying information from an external device (e.g., information supply apparatus 9, which may be an imaging device) will now be described with reference to FIG. 3.

In this case, prior to the start time (i.e., when the information supply device 9 will begin supplying information), at least one client apparatus has sent a request to transmit information from the information supply device 9 to the server 11.

Therefore, at the information supply start time (for example, at the start time of a live broadcast), the information supply device 9 sequentially transmits blocks X1 to X4, which comprise the designated information, to the server 11 in the sequence of X1, X2, X3, X4. The processing device 13 of the server 11 stores blocks X1 to X4 sent from the information supply apparatus 9 in the first storage device 12a (storage device for transmitting).

At this time, blocks X1 to X4, which were sent from the information supply device 9, may also be stored in the second storage device 12b (storage device for re-transmitting). In this case, blocks X1 to X4 can be read from the second storage device 12b if re-transmission is requested (described further below).

Moreover, while the processing device 13 is storing blocks X1 to X4 received from the information supply device 9 in the first storage device 12a, the processing device 13 simultaneously or nearly simultaneously transmits the blocks via the network 10 using the multicast method by the communication device 14. In other words, if the start time for supplying information (blocks X1 to X4) from the information supply device 9 is predetermined, and if a request to transmit the information is received from a client apparatus prior to the supply start time, the server 11 will transmit the information supplied from the information supply device 9 (blocks X1 to X4) via the network 10 and also store the information in the first storage device 12a.

Information supplied from the information supply device 9 is transmitted via the network 10 in a one-time process performed when blocks X1 to X4 arrive. During or after transmission of new information supplied from the information supply device 9 via the network 10, if a request to transmit information is received from another client apparatus (1 to n), the server 11 will continue to read the information from the first storage device 12a and transmit the information via the network 10 after completing the transmission of the new information.

Note that, if the server 11 receives a transmit request from another client apparatus while the information supply device 9 is supplying new information, the server 11 may transmit the new information to the other client apparatuses after the supply of the new information is completed or may begin transmitting the new information when the transmit request is received. If the server 11 is to begin transmitting the new information when the transmit request is received and if the download method is to be used for playing back the new information, the server 11 transmits the information using the communication method in the first embodiment. If the streaming method is to be used for playing back the new information, however, the server 11 transmits the information using the communication method in the second embodiment to be described below.

As discussed above, block errors may occur in blocks transmitted from the server 11. For example, while blocks X1 to X4 transmitted from the server 11 are being transferred over the network 10, data in blocks X1 to X4 may drop out or may change (e.g., be corrupted during transmission). Or, in some cases, client apparatus (1 to n) may not be able to receive blocks X1 to X4 transmitted from the server 11.

Although an error may be detected using the subdivision sequence information, it may be difficult to correct the error using the subdivision sequence information. Therefore, error detection/correction information is preferably appended to the blocks and is separate from the subdivision sequence information.

Therefore, when blocks X1 to X4 are transmitted, the server 11 appends block error detection/correction information to each block X1 to X4, as shown in FIG. 14.

For example, an ECC code, such as the Reed-Solomon code, may be used as the block error detection/correction information. By appending such a block error detection/correction code to the blocks, the client apparatus can detect missing or changed data in a received block. Moreover, if the extent of the missing or changed data is relatively small, the correct data can be reconstituted by performing error correction. On the other hand, if there is a large amount missing or changed data, such that the correct data can not be reconstituted by performing error correction, the client apparatus (1 to n) can request the server 11 to retransmit the block.

A variety known techniques may be utilized to generate the error detection/correction information. For example, parity bit information, BCH coding, RS coding, or other similar techniques may be utilized. BCH and RS codes are used to detect and correct erroneous bits in situations in which a plurality of bit errors have occurred in data comprised of a plurality of bits.

By utilizing block error detection/correction information, error correction will enable the data to be processed correctly, in the event that there is only a small amount of missing or changed data. As a result, the number of retransmissions can be decreased and the quantity of data on the network 10 can be reduced.

A representative method for operating client apparatus (1 to n) when receiving information (blocks of data) will be described now with reference to FIG. 1.

Client apparatus (1 to n) receive blocks from the network 10 and the group address for the blocks of data are identical to the group address of the client apparatus. Client apparatus (1 to n) then perform error detection based upon the subdivision sequence information or block error detection/correction information that was received together with the block. For example, communication device 6 and/or processing device 7 may process errors (see FIG. 12).

One representative method for performing error detection will be described next.

For example, non-received blocks can be detected by referencing the subdivision sequence information. Thus, if the subdivision sequence information is not consecutive, the block corresponding to the missing subdivision sequence information is detected as having not been received. In this case, information specifying the non-received block (e.g., information that identifies the designated information and the subdivision sequence information) is stored in the receiving management table 5.

Further, if information related to the data size of the block is also included in the subdivision sequence information, it is possible to detect whether all the data of the block has been correctly received by referencing the subdivision sequence information. If all the data of the block was not correctly received, information specifying the block (e.g., identifying information that identifies the designated information and a subdivision sequence information) is stored in the receiving management table 5.

Based upon the block error detection/correction information that is received together with the block, error detection and error correction for a received block can be performed. For example, if an error has been detected in a received block, error correction is performed when possible. If error correction is not possible, information specifying the block for which error correction is not possible (e.g., identifying information that identifies the designated information and subdivision sequence information) is stored in the receiving management table 5.

Based upon the information stored in the receiving management table 5, the client apparatus (1 to n) will send one or more retransmit requests to the server 11. The operation for re-transmitting a block of the server 11 in response to receiving a retransmit request will be described further below.

A representative method for operating the server 11 will now be described.

Preferably, the server 11 can simultaneously perform the following operations in parallel: wait for receiving transmit requests, transmit blocks, and retransmit blocks.

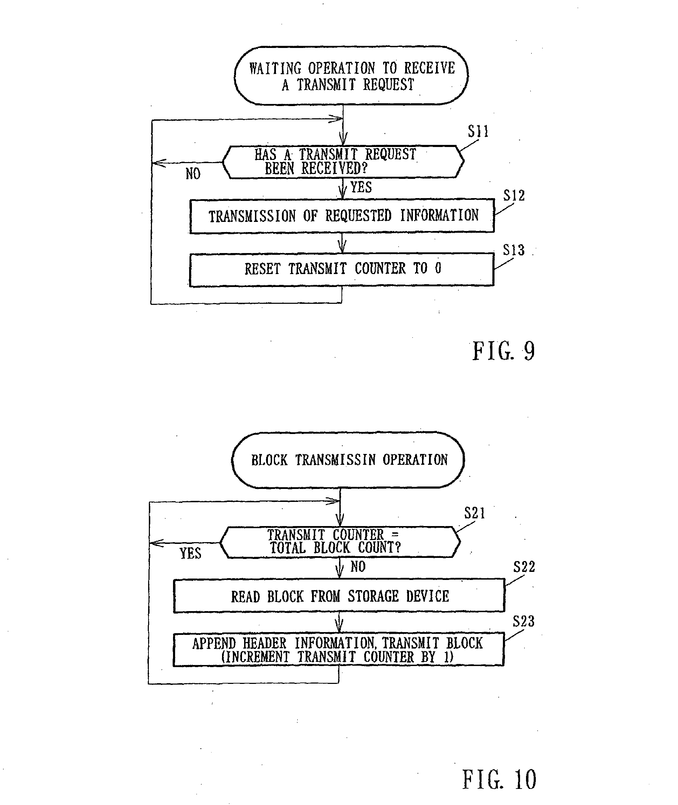

A representative example showing the server 11 waiting for receiving transmit requests will be described with reference to the flowchart illustrated in FIG. 9.

First, in step S11, the server 11 determines whether a transmit request has been received from one or more client apparatus (1 to n). If the server 11 can transmit a plurality of information, client apparatus (1 to n) send transmit requests that include identifying information that identifies the information requested to be transmitted, or send transmit requests corresponding to the information requested to be transmitted.

If a transmit request has not been received (i.e., "NO" in Step S11), the server 11 continues to wait. However, if a transmit request has been received (i.e., "YES" in Step S11), the process proceeds to step S12.

In step S12, the required information (such as group addresses, and the total number of blocks of information to be transmitted) for information (block) reception is transmitted using the unicast method to the particular client apparatus that sent the transmit request. At the same time, the total block count is stored.

Next, in step S13, the transmit counter is reset to 0 so as to start the operation for transmitting blocks via the network 10.

Thereafter, whenever a transmit request is received from any client apparatus (1 to n), the transmit counter is reset to 0.

A representative method for operating the server 11 when transmitting information (blocks) via the network 10 will now be described with reference to the flowchart shown in FIG. 10.

First, in step S21, the server determines whether the value stored in the transmit counter equals the total block count.

If the transmit counter value equals the total block count (i.e., "YES" in Step S21), the server 11 continues to wait. However, if the transmit counter value does not equal the total block count (i.e., "NO" in Step S21), the process proceeds to step S22.

In step S22, the sequential block indicated by the read block pointer is read from the storage device 12a.

Next, in step S23, information such as the group address, subdivision sequence information, error detection/correction information, and information identifying the information to be sent is appended to the read block. Then, the block is transmitted via the network 10 using the multicast method. At the same time, the transmit counter is incremented by 1. Also, the block pointer is set to the point indicating the next block to be transmitted. For example, the block pointer is set to correspond to the subdivision sequence information. For usual transmissions, the block pointer may be incremented by 1. However, in the case of retransmissions, the block pointer is set to a value corresponding to the sequential order of the next block to be retransmitted.

When the total number of transmitted blocks equals the total block count, "YES" is indicated in step 21. In other words, the block transmission process continues when the value of the transmit counter does not equal the total block count. Further, the block transmitting process stops when the transmit counter becomes equal to the total block count.

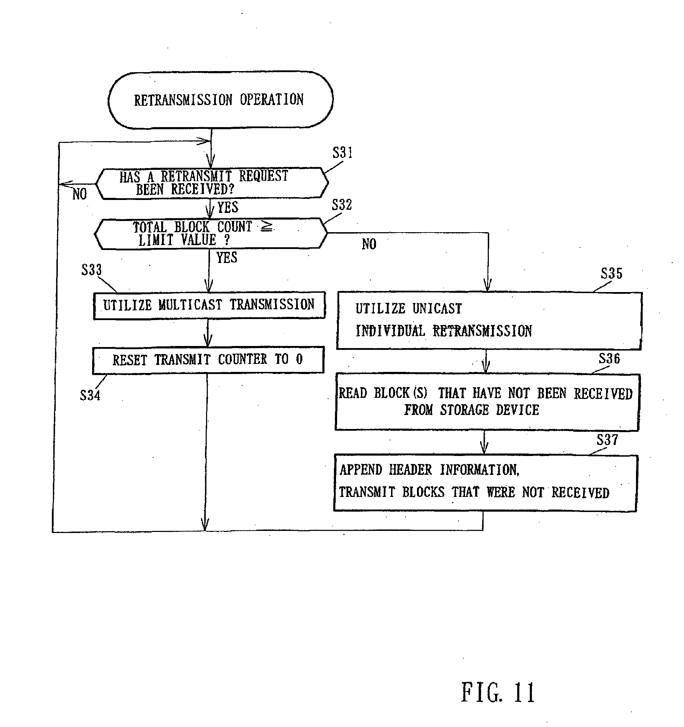

A representative method for re-transmitting blocks from the server 11 will now be described with reference to the flowchart shown in FIG. 11.

In step S31, the server 11 determines whether a retransmit request has been received from a client apparatus (1 to n).

If a retransmit request has not been received (i.e., "NO" in Step S31), the server 11 continues to wait. However, if a retransmit request has been received (i.e., "YES" in Step S31), the process proceeds to step S32. Client apparatus (1 to n) send retransmit requests, which include information (e.g., an identifying information and an subdivision sequence information) specifying a block that has not been received, to the server 11. For example, one or more blocks may not have been received.

In step S32, the server 11 calculates the total number of blocks (total block count) transmitted via the network 10 per unit time, if blocks requested to be retransmitted are individually retransmitted. Then, the server 11 determines whether the total block count exceeds the limit value. If the total block count exceeds the limit value, the process proceeds to step S33. If the total block count does not exceed the limit value (i.e., "NO" in Step S32), the process proceeds to step S35.

In step S33, the server 11 retransmits the blocks using the multicast method. In other words, due to a relatively large total number of blocks requested to be retransmitted (which will place a large burden on the network), the blocks are preferably re-transmitted using the multicast method. Therefore, the server 11 notifies the client apparatus that sent the retransmit request that the retransmission will be performed using the multicast method. For example, the server 11 notifies the client apparatus of the group address.

Next, in step S34, the transmit counter is reset to 0. As a result, "NO" is indicated in step S21 (FIG. 10) and the retransmission of the blocks requested to be retransmitted is started using the multicast method.

After the blocks requested for retransmission have been retransmitted, the transmit counter is set to the total number of blocks. As a result, the retransmission operation ends.

However, in step S35, the server 11 retransmits the blocks using the unicast method. In other words, due to a relatively small total number of blocks requested to be retransmitted (which will not overly burden the network), the server elects to retransmit the blocks using the unicast method. Therefore, the server 11 notifies the client apparatus, which sent the retransmit request, that the retransmission will be performed using the unicast method.

In step S36, the server 11 reads the blocks that were not received by the client apparatus that sent the retransmit request.

Then, in step S37, data identifying information, subdivision sequence information, and error detection/correction information are appended to the blocks, and the blocks are retransmitted using the unicast method to the client apparatus that sent the retransmit request.

Note that, when blocks are to be retransmitted using the multicast method, the same group address as that used when the blocks were previously transmitted can be used. Alternatively, a new group address can be allocated.

As described further above, this representative embodiment includes the second storage device for re-transmission 12b in addition to the first storage device (storage device for transmitting) 12a. Information (blocks) transmitted from an external or another device is stored in the first storage device for transmitting 12a and the second storage device for re-transmission 12b. In the alternative, blocks stored in the first storage device for transmitting 12a may be stored in the second storage device for re-transmission 12b when a retransmission process is performed. Blocks to be retransmitted may be read from the second storage device for re-transmission 12b, and then transmitted to the client apparatus that sent the retransmit request. Of course, blocks to be transmitted and blocks to be retransmitted may both be stored in the first storage device 12a. Moreover, a block stored in the first storage device 12a may be read, transmitted and retransmitted.

In this representative embodiment, the server 11 determines whether to retransmit the blocks using the unicast method or the multicast method based upon the total number of blocks requested to be retransmitted (blocks not received) by the client apparatus.

Of course, in response to retransmit requests from the client apparatus, the server 11 may exclusively use the unicast method or exclusively use the multicast method.

In addition, the server 11 can determine the quantity of data on the network 10 per unit time, and based on the quantity of data on the network 10, the server 11 can control (band limiting control) the number of blocks to be transmitted via the network 10. As a result, the quantity of data on the network 10 can be suitably regulated and degradation of the transfer efficiency can be avoided.

Additionally, the operation of the server 11 is not limited to those shown in FIGs. 9 through 11. For example, when a request to receive the required information is sent by one of the client apparatuses, the server 11 restarts the transmit counter of the client apparatus corresponding to the required information. Then, every time the server 11 sends a block comprising the required information to each client apparatus, the server 11 increments the transmit counter of that client apparatus by one. When all of the count values of the transmit counters of the individual client apparatuses corresponding to the required information become equal to the total number of blocks of the required information, the server 11 stops transmitting the block comprising the required information.

Next, a second embodiment of the communication method of the present invention will be explained. This embodiment is ideal when using the streaming method for playing back information (data). A communication apparatus into which the present embodiment is to be implemented can be configured using the same server (information transmitting apparatus) and client apparatus (information receiving apparatus) as those used in the first embodiment.

In this embodiment, information (data) is subdivided into multiple (two or more) groups (hereafter referred to as "segments"). Each segment comprises one or more blocks.

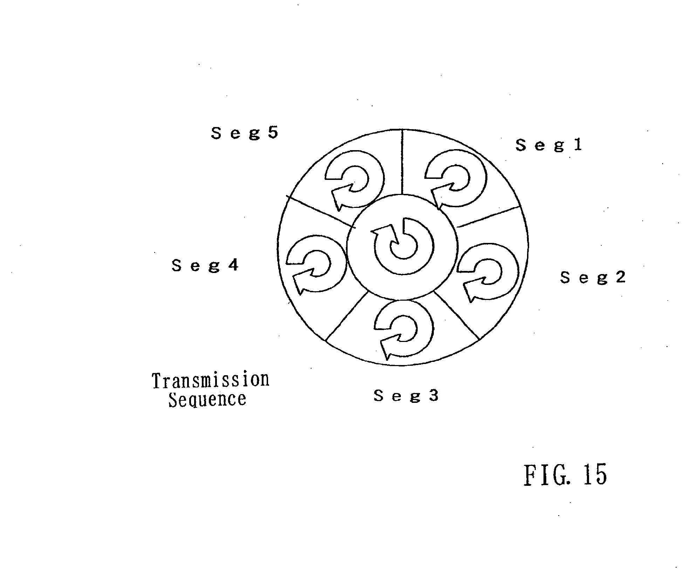

FIG. 15 shows an example in which information has been divided into segments and blocks. In FIG. 15, information is subdivided into fifteen blocks X1 through X15 starting at the beginning. Then, blocks X1 through X3 are grouped into the first segment 1 (Seg 1), blocks X4 through X6 are grouped into the second segment 2 (Seg 2), blocks X7 through X9 are grouped into the third segment 3 (Seg 3), blocks X10 through X12 are grouped into the fourth segment 4 (Seg 4), and blocks X13 through X15 are grouped into the fifth segment 5 (Seg 5).

A segment (the blocks included in a segment) is transmitted using, for example, the method described below. The segment is transmitted when transmission of the segment has been requested. If a request to transmit the segment is received while the segment is already being transmitted, the segment may again be transmitted after the first transmission has been completed or the transmission of the segment may be extended. For extending the transmission of the segment, the method used in the first embodiment is used. For example, if segment 1 comprises blocks X1, X2, and X3, those blocks will be cyclically transmitted in a predetermined sequence, such as block X1, X2, X3, X1, X2, .... Multiple segments may also be transmitted simultaneously or sequentially (i.e., after the transmission of one segment is completed, the next segment is transmitted).

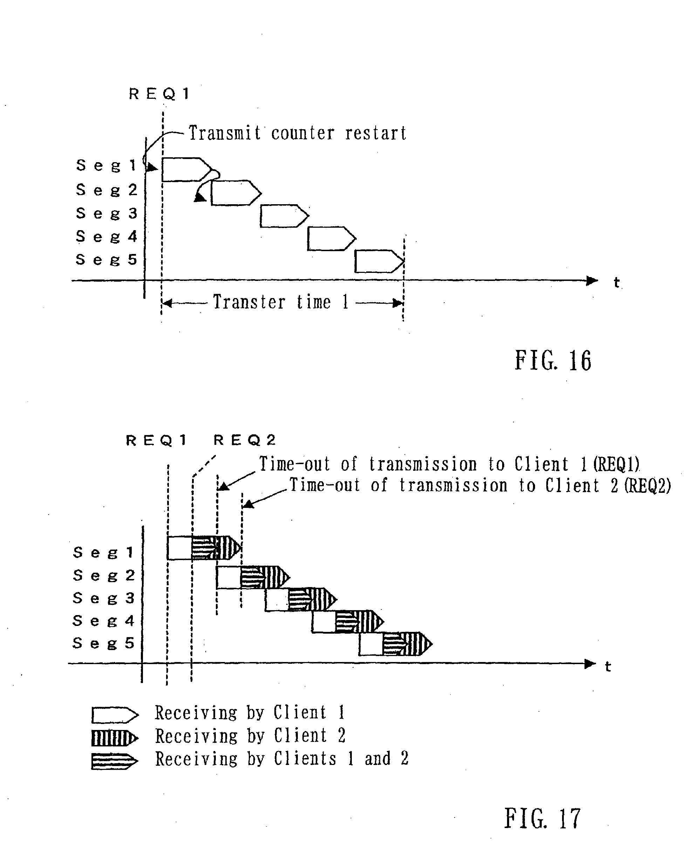

FIG. 16 shows an example of transmission sequence for segments 1 through 5 when there is only one client apparatus. The pentagonal arrows indicate the transmission periods for the applicable segments (blocks included in the segments). In the example shown in FIG. 16, segments 1 through 5 are transmitted sequentially. For example, after segment 1 is transmitted, the next segment, segment 2, is transmitted. In the example in FIG. 16, the time needed for client 1 to receive the required information after sending a transmit request REQ1 (transmission time 1) will be the total time needed for transmitting blocks X1 through X5 included in each segment 1 through 5.

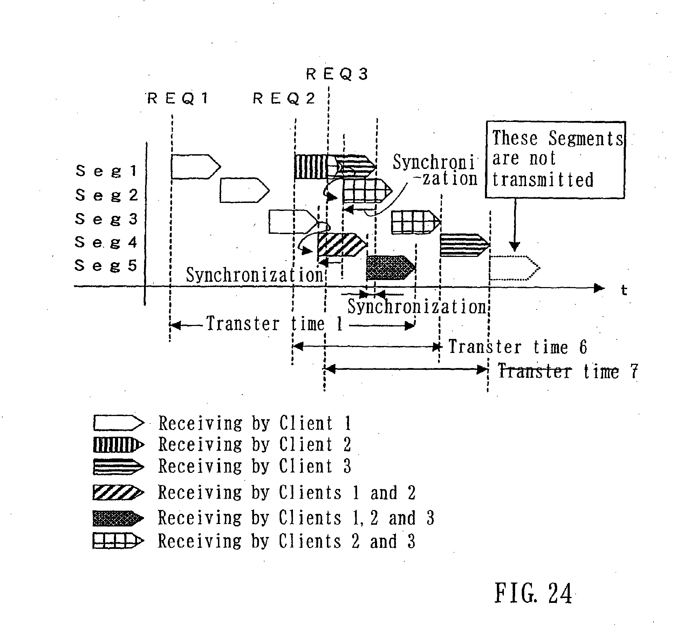

If segments 1 through 5 are to be transmitted simultaneously (see FIG. 24), the transmission speed (transfer speed) of the server is the sum of the transmission speed (transfer speed) for segments 1 through 5. When a method to transmit segments simultaneously is used, the transfer time will be shorter than that required for sequential transmission, provided that the maximum transfer speed of the communication line, for example, is the same. However, since the load on the communication line will increase, it may be necessary to make the transmission of other information wait.

The transmission of each segment is started by restarting (resetting the counter value to "0") the transmit counter, for example, of the client apparatus that corresponds to each segment. If client apparatus (1) sends a transmit request (REQ1) to receive the required information comprising segments 1 through 5 starting with segment 1, the transmit counter "Segment 1 - Client 1" is restarted. As a result, blocks X1 through X3, which are included in segment 1, are sequentially transmitted to client apparatus (1). Moreover, when the transmit counter "Segment 2 - Client 1" is restarted, blocks X4 through X6, which are included in segment 2, are sequentially transmitted to client apparatus (1).

Upon receiving the blocks in each segment, client apparatus (1) plays back each segment as it is received or multiple received segments. This playback process is executed while sequentially receiving segments.

Each block packet can include, for example, the total segment count information that indicates the total number of segments comprising the required information, the segment subdivision sequence information that indicates the sequence of the segments containing the blocks, the total block count information that indicates the total number of blocks comprising the segment, and the block subdivision sequence information that indicates the sequence of the blocks, etc. Based on the various types of information included in the received block packet, each client apparatus executes such tasks as receiving the blocks and linking the blocks.

Note that FIG. 16 omits the descriptions of the process of sending a transmit request (REQ1) from client apparatus (1) to the server 11 and the process of transmitting a group address (INF1) from the server 11 to client apparatus (1).

Various methods can be used to send a transmit request (REQ). For example, a method can be used that sends the transmit request (REQ) for each segment comprising the required information. Alternatively, a method can be used that sends only one transmit request (REQ) at the start. The first method is preferable for receiving an arbitrary segment using an information receiving apparatus. The second method is ideal for receiving the required information starting with the first segment or an arbitrary segment using an information receiving apparatus. If the latter method is used, when the transmission of a segment is finished, the information transmitting apparatus automatically starts transmission of the next segment. The identification numbers of the segments to be transmitted and the identification number of the segment with which the transmission will start can be specified using various methods, such as including these types of information in the transmit request (REQ).

Next, an explanation will be given of what happens when segments comprising the required information are already being transmitted to a client apparatus when a transmit request for the same information is received from another client apparatus.

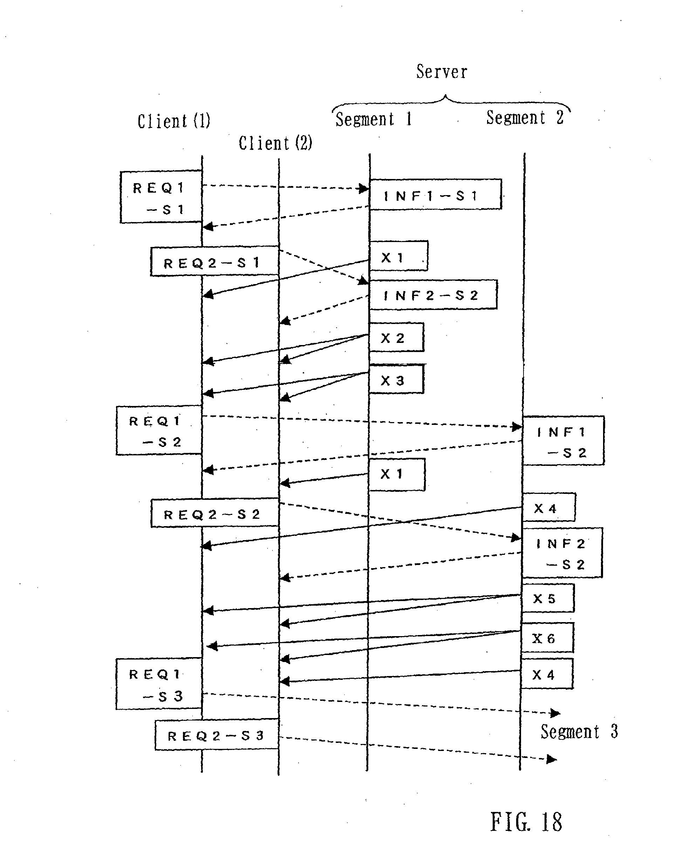

First, using FIGs. 17 and 18, an explanation will be given of what happens when a transmit request REQ is sent for each segment comprising the required information.

FIG. 17 shows what happens in a case in which client apparatus (1) has sent a transmit request REQ1 to receive each segment, and while the server 11 is transmitting each segment 1 (blocks included in each segment) to client apparatus (1), client apparatus (2) sends a transmit request (REQ2) requesting the transmission of the same information. That is, client apparatus (2) is requesting the transmission of the same segment already being transmitted to client apparatus (1).

Client apparatus (1) sends to the server 11 a transmit request (REQ1-S1) requesting the transmission of the required information starting with segment 1.

When the server 11 receives the transmit request (REQ1-S1) sent from client apparatus (1), it transmits a group address (e.g., group address INF1-S1) to client apparatus (1).

At the same time, the server 11 restarts the transmit counter "Segment 1 - Client 1" of client apparatus (1) allocated to segment 1. As a result, blocks X1 through X3, which comprise segment 1, are specified by the group address INF1-S1 and transmitted sequentially. For this process, the network should preferably be set up so that each block reaches client apparatus (1), which had sent the transmit request REQ1-S1. The count value of the transmit counter "Segment 1 - Client 1" is incremented by one every time blocks X1 through X3 are specified by the group address INF1-S1 and transmitted. Then, when the transmit counter "Segment 1 - Client 1" times out (i.e., when its count value matches the total number of blocks in segment 1), the operation of specifying blocks X1 through X3 included in segment 1 with the group address INF1-S1 and transmitting them is stopped.

Upon receiving the group address INF1-S1 transmitted from the server 11, client apparatus (1) stores the address as the group address to which it belongs. Then, client apparatus (1) receives and stores blocks X1 through X3 specified with the group address INF1-S1.

Let us assume that, after block X1 has been transmitted, client apparatus (2) sends to the server 11 a transmit request (REQ2-S1), requesting the transmission of the same information starting with segment 1.

When the server 11 receives the transmit request (REQ2-S1) sent from client apparatus (2), the server 11 transmits a group address (e.g., group address INF2-S2) to client apparatus (2). The server 11 also restarts the transmit counter "Segment 1 - Client 2" of client apparatus (2) allocated to segment 1. For this process, the network preferably is set up so that each block reaches client apparatus (2) that had sent the transmit request REQ2-S1.

When client apparatus (2) receives the group address INF2-S2 transmitted from the server 11, client apparatus (2) stores this address as the group address to which it belongs.

Here, when the transmit counter "Segment 1 - Client 2" is restarted, the count value of the transmit counter "Segment 1 - Client 1" does not match the total number of blocks in segment 1, and, therefore, block X2 is specified with group addresses INF1 and INF2 and is transmitted.

As a result, client apparatus (1) and client apparatus (2) receive and store block X2 specified with the group addresses INF1-S1 and INF2-S1 transmitted from the server 11.

Block X3 is also specified with group addresses INF1-S1 and INF2-S1 and is transmitted.

When client apparatus (1) has completely received blocks X1 through X3 included in segment 1, client apparatus (1) sends to the server 11 a transmit request REQ1-S2 to request the transmission of the following segment, segment 2. Whether all of the blocks included in a segment have been received is determined based on the total number of blocks comprising the segment, the number of blocks received (blocks have subdivision identification information), or error detection/correction information.

When the server 11 receives the transmit request REQ1-S2 sent from client apparatus (1), the server 11 transmits a group address (e.g., group address INF1-S2) to client apparatus (1). The server 11 also restarts the transmit counter "Segment 2 - Client 1" of client apparatus (1) allocated to segment 2. As a result, blocks X4 through X6, which comprise segment 2, are specified by the group address INF1-S2 and transmitted.

During this process, the server 11 transmits block X1 of segment 1 and block X4 of segment 2 simultaneously. The expression "transmitting multiple blocks simultaneously" means, for example, transmitting multiple blocks using multiple channels at the same time when multiple channels are provided that can transmit blocks at the same time. Alternatively, it means transmitting multiple blocks through multiple channels at their respective transmission times when multiple channels are provided that transmit blocks at different times.

When block X3 has been transmitted, the count value in the transmit counter "Segment 1 - Client 1" matches the total number of blocks in segment 1, and, thus, the process of specifying the blocks comprising segment 1 with the group address INF1-S1 and transmitting them is stopped. Meanwhile, the count value in the transmit counter "Segment 1 - Client 2" does not match the total number of blocks in segment 1, and, thus, block X1 continues to be specified with the group address INF2-S1 and transmitted.

Then, when block X1 is transmitted, the count value in the transmit counter "Segment 1 - Client 2" matches the total number of blocks in segment 1, and, thus, the process of specifying the blocks comprising segment 1 with the group address INF2-S1 and transmitting them is stopped.

When client apparatus (2) has completely received blocks X2 through X1 included in segment 1, client apparatus (2) sends to the server 11 a transmit request REQ2-S2 requesting the transmission of the following segment, segment 2.

Thereafter, in the same manner, the blocks included in each segment are specified with the group address allocated to each client apparatus and are transmitted to each client apparatus.

Note that each client apparatus can request the transmission of any arbitrary segment via a transmit request REQ.

In this embodiment, since a transmission request can be issued for individual segments, it is possible to receive only the necessary segments. Furthermore, since the same communication method as that described in the first embodiment is used for the same segment transmission method, the same effect as that described in the first embodiment will be obtained.

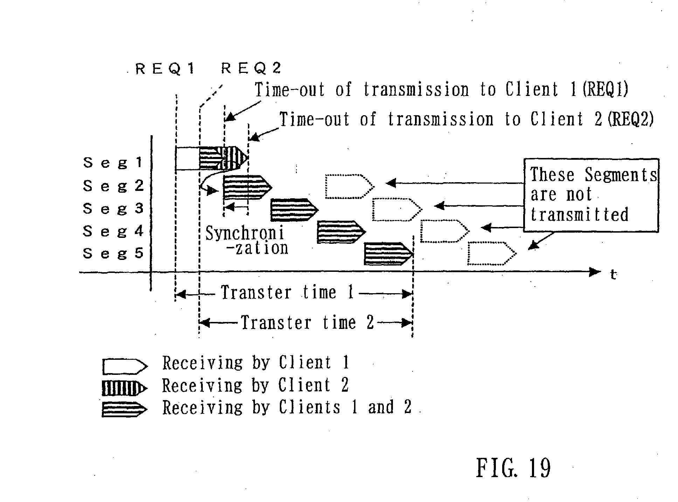

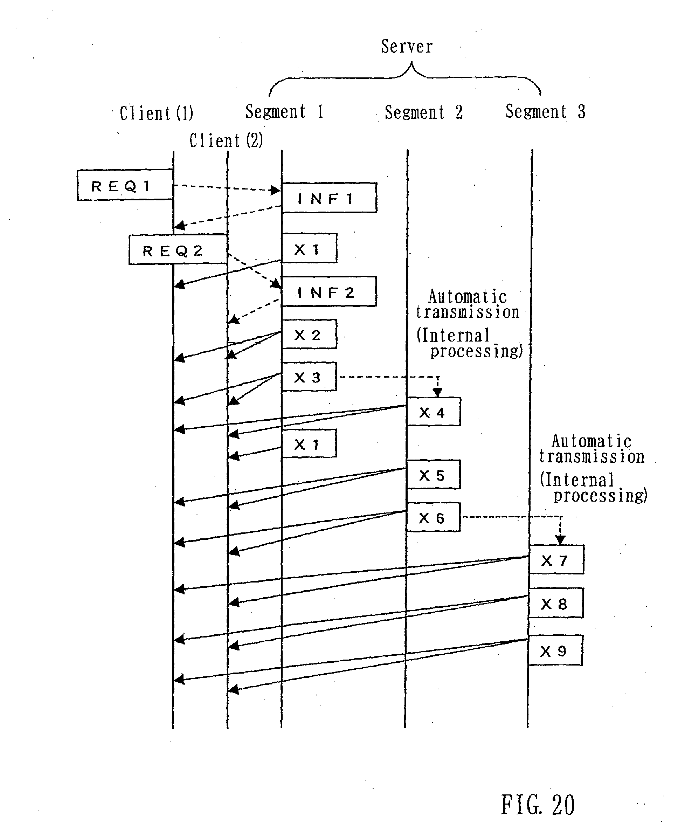

Next, using FIGs. 19 and 20, an explanation will be given of what happens when a transmit request REQ for the required information is sent only once at the start.

FIG. 19 shows what happens in a case in which client apparatus (1) has sent a transmit request REQ1 to receive the required information starting with the first segment when the server 11 is in a standby state, and while the server 11 is transmitting the first segment 1 (blocks included in segment 1) to client apparatus (1), client apparatus (2) sends a transmit request (REQ2) requesting the transmission of the same information starting with the first segment 1. That is, client apparatus (2) is requesting the transmission of the same segment as that being transmitted to client apparatus (1).

Here, let us assume that client apparatus (2) is capable of simultaneously receiving blocks included in multiple different segments. The expression "capable of simultaneously receiving" means being capable of receiving multiple blocks that are transmitted using multiple channels at the same time when multiple channels are provided that can transmit blocks at the same time. Alternatively, the expression "capable of simultaneously receiving" can mean being capable of receiving multiple blocks that are transmitted through multiple channels at their respective transmission times when multiple channels are provided that transmit blocks at different times.

Client apparatus (1) sends to the server 11 a transmit request REQ1 requesting the transmission of the required information starting with segment 1. For example, client apparatus (1) sends to the server 11 a transmit request REQ1 comprising both the identification information for the required information and the information requesting the transmission starting with segment 1.

When the server 11 receives the transmit request REQ1 sent from client apparatus (1), the server 11 transmits a group address (e.g., group address INF1) to client apparatus (1). The server 11 also restarts (resets the count value to "0") the transmit counter "Segment 1-Client 1" of client. apparatus (1) allocated to segment 1. As a result, blocks X1, X2, and X3, which are included in segment 1, are specified by the group address INF1 and are transmitted sequentially. The count value of the transmit counter "Segment 1 - Client 1" is incremented by one every time blocks X1 through X3 are specified by the group address INF1 and transmitted. For this process, the network preferably is set up so that blocks X1 through X3 reach client apparatus (1), which had sent the transmit request REQ1.

When client apparatus (1) receives the group address INF1 transmitted from the server 11, client apparatus (1) stores this address as the group address to which client apparatus (1) belongs. Then, client apparatus (1) receives and stores blocks X1 through X3 specified with the group address INF1.

Let us assume that, after block X1 has been transmitted, client apparatus (2) sends to the server 11 a transmit request REQ2 requesting the transmission of the same information starting with segment 1.

When the server 11 receives the transmit request REQ2 sent from client apparatus (2), the server 11 transmits a group address (e.g., group address INF2) to client apparatus (2). The server 11 also restarts the transmit counter "Segment 1 - Client 2" of client apparatus (2) allocated to segment 1. As a result, blocks X2, X3, and X1, which are included in segment 1, are specified by the group address INF2 and are transmitted sequentially. For this process, the network preferably is set up so that blocks X2 through X1 reach client apparatus (2) which had sent the transmit request.

When client apparatus (2) receives the group address INF2 transmitted from the server 11, client apparatus (2) stores this address as the group address to which client apparatus (2) belongs. Then, client apparatus (2) receives blocks X2 through X1 for which group address INF2 is specified.Here, when the transmit counter "Segment 1 - Client 2" is restarted, the count value of the transmit counter "Segment 1 - Client 1" does not match the total number of blocks in segment 1, and, therefore, blocks X2 and X3 are specified with group addresses INF1 and INF2 and transmitted.

Then, when block X3 is specified with group addresses INF1 and INF2 and is transmitted, the count value of the transmit counter "Segment 1 - Client 1" matches the total number of blocks in segment 1 (i.e., the counter times out). As a result, the server 11 recognizes that all of the blocks comprising segment 1 have been transmitted to client apparatus (1) and stops the process of specifying the blocks comprising segment 1 with the group address INF1 and transmitting them.

Furthermore, when the transmit counter "Segment 1 - Client 1" times out, the server 11 determines the transmission status of segment 2, which is to be transmitted after segment 1. Then, based on the transmission status of segment 2, which is to be transmitted next, the server 11 restarts the transmit counter "Segment 2 - Client 1" of client 1 allocated to segment 2, which is to be transmitted next, or synchronizes the counter to the transmit counter of another client apparatus to which segment 2 is currently being transmitted (i.e., sets the number of blocks transmitted to the same value). Here, if the client apparatus cannot receive the blocks included in the segment following the segment that is currently being received (cannot receive them by reading ahead), the transmit counter will not be synchronized, but instead will be restarted.

In FIGs. 19 and 20, the blocks in segment 2 have not been transmitted, and, thus, the server 11 automatically restarts the transmit counter "Segment 2 - Client 1" of client 1 allocated to segment 2, which is to be received next, when the transmit counter "Segment 1-Client 1" times out. As a result, blocks X4 through X6 included in segment 2 are specified with the group address INF1 and transmitted. During this process, block X1 of segment 1 and block X4 of segment 2 are transmitted simultaneously.

Furthermore, since client apparatus (2) can receive data by reading ahead, the server 11 transmits the group address INF1 to client apparatus (2).

Client apparatus (2) receives and stores the group address INF1 transmitted from the server 11. As a result, client apparatus (2) receives and stores the block specified with the group address INF1 or INF2. In FIGs. 19 and 20, block X1 specified with the group address INF1 and block X4 specified with the group address INF2 are received and stored. That is, client apparatus (2) reads ahead and receives block X4 of segment 2 specified with the group address INF2, while receiving block X1 of segment 1 specified with the group address INF1.

Because the count value in the transmit counter "Segment 1 - Client 2" does not match the total number of blocks in the segment even after block X3 has been transmitted, the server 11 continues to transmit block X1. That is, the server 11 extends the block transmission of the segment (segment 1 in this case) that is being transmitted when the transmit request REQ2 is received from client apparatus (2). As a result, client apparatus (2) can receive the blocks in the first segment 1, comprising the required information early.

When block X1 is specified with group address INF1 and is transmitted, the transmit counter "Segment 1 - Client 2" times out. When this counter times out, the server 11 stops the process of specifying the blocks comprising segment 1 with the group address INF2 and transmitting them.

Additionally, since client apparatus (2) has read ahead and received a block included in segment 2 (block X4 in this case), the server 11 synchronizes the transmit counter "Segment 2 - Client 2" of client apparatus (2) allocated to segment 2. That is, the server 11 sets the count value of this transmit counter to the count value of the transmit counter "Segment 2 - Client 1" of client apparatus (1), which has already begun counting the blocks of segment 2.

Then, when both the transmit counter "Segment 2 - Client 1" and the transmit counter "Segment 2 - Client 2" time out, the server 11 restarts the transmit counter "Segment 3 - Client 1" and the transmit counter "Segment 3- Client 2" of client apparatus (1) and client apparatus (2), respectively, allocated to segment 3, which is to be transmitted next to client apparatus (1) and client apparatus (2).

Likewise, the server 11 specifies blocks X5 through X9 of segment 2, which follow block X4, with group addresses INF1 and INF2 and transmits them. In this way, after the synchronization is achieved, blocks X4 through X9 need be transmitted only once to client apparatus (1) and client apparatus (2), thereby reducing the processing load on the information transmitting apparatuses and the load on the communication line.

Client apparatus (1) and client apparatus (2) receive and store blocks X5 through X9 for which group addresses INF1 and INF2 are specified.

The server 11 stops transmitting the blocks included in a segment when all transmit counters of client apparatuses allocated to that segment have timed out.

Note that the method of having client apparatus (2) read ahead and receive segment 2, which is being transmitted to client apparatus (1), is not limited to that described in the aforementioned embodiment. For example, to transmit the blocks in segment 2 to client apparatus (1) while client apparatus (2) is receiving the blocks in segment 1, it is possible to transmit the blocks to be transmitted to client apparatus (1) by specifying them with the group address INF1 of client apparatus (1) and the group address INF2 of client apparatus (2). In this case, the server 11 determines whether client apparatus (2) is ready to read ahead and receive data, and, based on the determination result, specifies the group address of the block to be transmitted. Also in this case, there is no need to transmit the group address INF1 of client apparatus (1) to client apparatus (2).

Various methods can be used to simultaneously transmit blocks included in different segments. For example, it is possible to provide a spare channel. If this method is used, the bandwidth will be reduced according to the number of spare channels. However, since the multicast method is used to transmit blocks, there is no need to provide a large number of spare channels.

In this embodiment, the client apparatus can read ahead and receive the blocks included in the segment that follows the segment currently being received, based on the multicast method. Therefore, as shown in FIG. 19, it is possible to shorten the transmission time (transfer time) for an information receiving apparatus that is requesting transmission of the same information as the required information whose transmission has already begun.

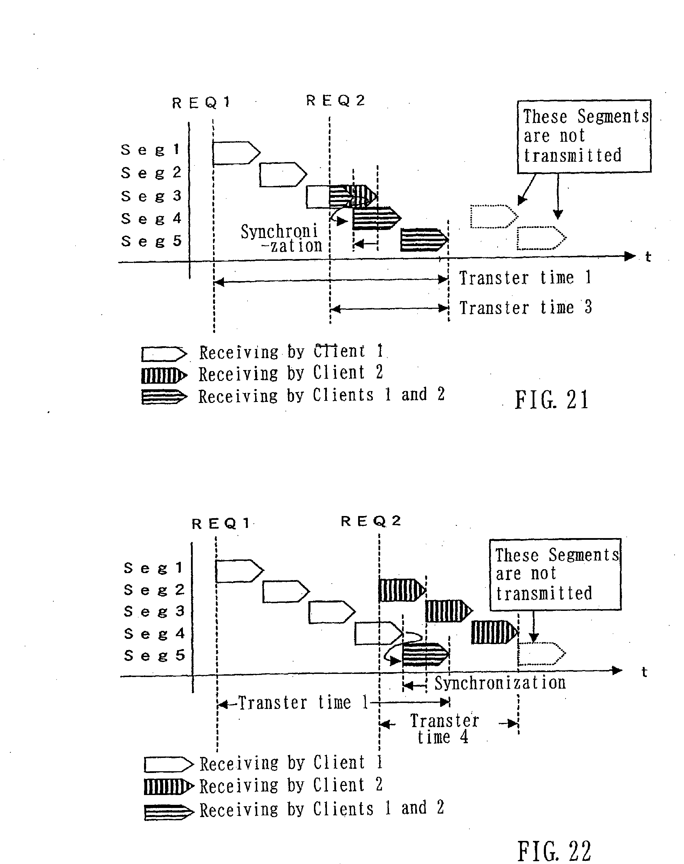

In the aforementioned embodiment, cases have been explained in which client apparatus (1) and client apparatus (2) request the transmission of the required information starting with the first segment. However, the communication method according to this embodiment can also be applied to other cases, such as that shown in FIG. 21. FIG. 21 shows what happens in a case in which client apparatus (1) has sent a transmit request REQ1 requesting the transmission of the required information starting with the first segment 1, and, while the blocks in segment 3 are still being transmitted to client apparatus (1), client apparatus (2) sends a transmit request REQ2 requesting the transmission of the same information starting with the third segment 3.

Also shown in the embodiment in FIG. 21, the transmission of the blocks in segment 3, which are being transmitted when the server 11 receives the transmit request REQ2 from client apparatus (2), is extended. As a result, client apparatus (2) can receive the blocks in segment 3 early.

Moreover, client apparatus (2) reads ahead and receives the blocks in segment 4 being transmitted to client apparatus (1), while receiving the blocks in segment 3. When, the transmission of the blocks in segment 3 to client apparatus (2) is completed, the count value of the transmit counter "Segment 4 - Client 2" allocated to segment 4 is synchronized to the count value of the transmit counter "Segment 4 - Client 1." Thereafter, the count values of the transmit counters of client apparatus (1) and client apparatus (2) vary in synchronization. As a result, the processing load on the information transmitting apparatuses and the load on the communication line are reduced.

In a next case, one client apparatus can send a transmit request requesting the transmission of information starting with a segment that is different from the segment being transmitted to another client apparatus.

FIG. 22 shows what happens in a case in which client apparatus (1) has sent a transmit request REQ1 requesting the transmission of the required information starting with the first segment 1, and, while the blocks in segment 4 are still being transmitted to client apparatus (1), client apparatus (2) sends a transmit request REQ2 requesting the transmission of the same information starting with the second segment 2.

Client apparatus (1) sends to the server 11 a transmit request REQ1 requesting the transmission of the required information starting with the first segment 1.

When the server 11 receives the transmit request REQ1 sent from client apparatus (1), the server 11 transmits a group address (e.g., group address INF1) to client apparatus (1). The server 11 also restarts the transmit counter "Segment 1 - Client 1" of client apparatus (1) allocated to segment 1. As a result, the blocks included in segment 1 are specified by the group address INF1 and are transmitted. Thereafter, the server 11 specifies the blocks included in the second segment 2, and the third segment 3, with the group address INF1 and transmits them.

When client apparatus (1) receives the group address INF1 transmitted from the server 11, client apparatus (1) stores this address as its own group address. Then, client apparatus (1) receives and stores the blocks specified with the group address INF1.

Here, let us assume that, while the blocks included in the third segment 3 are specified with the group address INF1 and are being transmitted, client apparatus (2) sends a transmit request REQ2 requesting the transmission of the same information starting with the second segment 2.

When the server 11 receives the transmit request REQ2 sent from client apparatus (2), the server 11 transmits a group address (e.g., group address INF2) to client apparatus (2). At the same time, the server 11 restarts the transmit counter "Segment 2 - Client 2" of client apparatus (2) allocated to segment 2, which has already been transmitted to client apparatus (1). Then, the server 11 simultaneously transmits the blocks in segment 4 specified with the group address INF1 and the blocks in segment 2 specified with the group address INF2.

Client apparatus (2) receives and stores the group address INF2. Then, client apparatus (2) receives and stores the blocks specified with the group address INF2.

When the transmit counter "Segment 4 - Client 1" of client apparatus (1) allocated to segment 4 times out, the server 11 stops the process of specifying the blocks included in segment 4 with the group address INF1 and. transmitting them. At the same time, the server 11 restarts the transmit counter "Segment 5 - Client 1" of client apparatus (1) allocated to segment 5, which follows segment 4. Then, the server 11 sends the group address INF1 of client apparatus (1) to client apparatus (2), in order to have client apparatus (2) read ahead and receive the blocks in segment 5, which blocks are to be transmitted next to client apparatus (1). In this way, the server 11 simultaneously transmits the blocks in segment 5 specified with the group address INF1 and the blocks in segment 2 specified. with the group address INF2.

Client apparatus (2) receives and stores the group address INF1. Then, client apparatus (2) receives and stores the blocks specified with the group address INF1 or INF2.

When the transmit counter "Segment 2 - Client 2" of client apparatus (2) allocated to segment 2 times out, the server 11 stops the process of specifying the blocks included in segment 2 with the group address INF2 and transmitting them. At the same time, the server 11 restarts the transmit counter "Segment 3 - Client 2" of client apparatus (2) allocated to segment 3, which has already been transmitted to client apparatus (1). Furthermore, since client apparatus (2) has already read ahead and received the blocks in segment 5, the server 11 synchronizes the count value of the transmit counter "Segment 5 - Client 2" of client apparatus (2) allocated to segment 5 to the count value of the transmit counter "Segment 5-Client 1" of client apparatus (1), which has already begun counting the blocks in segment 5. Based on this synchronization, the server 11 simultaneously transmits the blocks in segment 5 specified with the group address INF1 and the blocks in segment 3 specified with the group address INF2.

Client apparatus (1) receives and stores the blocks specified with the group address INF1. Additionally, client apparatus (2) receives and stores the blocks specified with the group address INF1 or INF2.

When the transmit counter "Segment 5 - Client 1" times out, the server 11 stops the process of specifying the blocks in segment 5 with the group address INF1 and transmitting them. The server 11 then specifies the blocks in segments 3 and 4, which have already been transmitted to client apparatus (1), but not to client apparatus (2), and transmits those blocks.

Note that the blocks in segment 5 have already been transmitted to client apparatus (2). Therefore, the server 11 does not execute the process of specifying the blocks in segment 5 with the group address INF2 and transmitting them. That is, the server 11 transmits the blocks in segment 4, which it was transmitting when it received the transmit request REQ2 from client apparatus (2), to client apparatus (2). When the transmit counter "Segment 4 - Client 2" times out, the server 11 stops the process of specifying the blocks in segment 4 with the group address INF2 and transmitting them.

In this embodiment, the segment (segment 5) that has not been transmitted to client apparatus (1), excluding the segment (segment 4) that is being transmitted to client apparatus (1) when a transmit request is received from client apparatus (2), is transmitted to client apparatus (1) and client apparatus (2). Likewise, the segment (segment 4) that is being transmitted to client apparatus (1) and the segments (segments 2 through 4) that have already been transmitted to client apparatus (1) are re-transmitted to client apparatus (2). In other words, the blocks included in the segments that have already been transmitted or are being transmitted to client apparatus (1) (i.e., segments 2 through 4) are specified with the group address INF2 and are sequentially transmitted. In this way, the number of blocks that must be transmitted to client apparatus (2), which subsequently requests the transmission of the same required information, can be reduced. Therefore, the specified segments can be transmitted within a short time to a client apparatus that subsequently requests the transmission of the same required information. Moreover, the processing load on the information transmitting apparatuses and the load on the communication line can be reduced. Note that the blocks included in the first segment to be transmitted (segment 2) to client apparatus (2), and the blocks included in the segment being transmitted (segment 4) to client apparatus (1) are transmitted simultaneously.

In the embodiment shown in FIG. 22, the blocks in the segment being transmitted when the transmit request REQ2 is received from client apparatus (2) will not be transmitted to client apparatus (2). That is, a client apparatus does not receive the blocks included in each segment starting with the middle segment, but is instead designed to sequentially receive the blocks starting with the first block.

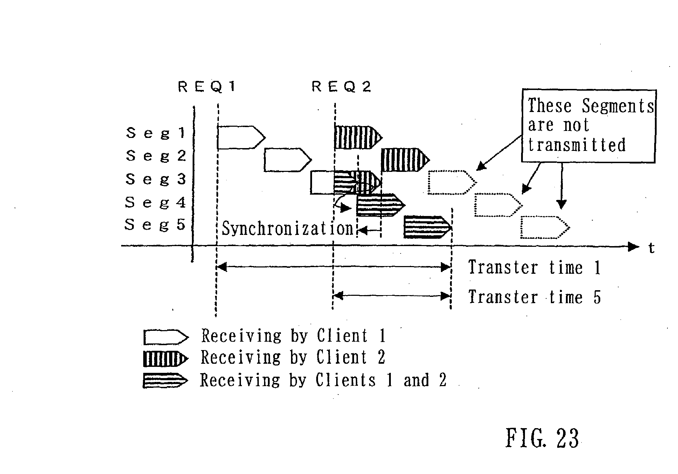

However, as shown in FIG. 23, it is also possible to use a configuration in which the segment (segment 3) being transmitted to client apparatus (1) when a transmit request is received from client apparatus (2).

FIG. 23 shows what happens in a case in which client apparatus (1) has sent a transmit request REQ1 requesting the transmission of the required information starting with the first segment 1 and is receiving the blocks in segment 3 when client apparatus (2) sends the transmit request REQ2 requesting the transmission of the same information starting with segment 1.

In the embodiment shown in FIG. 23, if the server 11 receives the transmit request REQ2 from client apparatus (2) while transmitting segment 3 to client apparatus (1), the server 11 restarts the transmit counter "Segment 1 - Client 2" of client apparatus (2) allocated to segment 1, which has already been transmitted to client apparatus (1). The server 11 also restarts the transmit counter "Segment 3 - Client 2" of client apparatus (2) allocated to segment 3, which is being transmitted to client apparatus (1). Based on this, the server 11 simultaneously transmits the blocks in segment 3 specified with both the group address INF1 transmitted to client apparatus (1) and the group address INF2 transmitted to client apparatus (2), and the blocks in segment 1 specified with the group address INF2.

Client apparatus (1) receives and stores the blocks specified with the group address INF1. Client apparatus (2) receives and stores the blocks specified with the group address INF1 or INF2.

When the transmit counter "Segment 3 - Client 1" times out, the server 11 restarts the transmit counter "Segment 4 - Client 1" of client apparatus (1) allocated to segment 4, which is to be transmitted to client apparatus (1) next. At this time, since the count value of the transmit counter "Segment 3 - Client 2" does not match the total number of blocks in segment 3 (has not timed out), the process of specifying the blocks in segment 3 with the group address INF2 and transmitting them continues. Meanwhile, the server 11. sends the group address INF1 of client apparatus (1) to client apparatus (2), in order to have client apparatus (2) read ahead and receive the blocks in segment 4, which are to be transmitted next to client apparatus (1). Therefore, the server 11 simultaneously transmits the blocks in segment 4 specified with the group address INF1, the blocks in segment 3 specified with the group address INF2, and the blocks in segment 1 specified with the group address INF2.

Client apparatus (1) receives and stores the blocks specified with the group address INF1. Client apparatus (2) receives and stores the group address INF1 transmitted from the server 11. Based on this, client apparatus (2) receives and stores the blocks specified with the group address INF1 or INF2.

When the transmit counter "Segment 3 - Client 2" times out, the server 11 stops the process of specifying the blocks in segment 3 with the group address INF2 and transmitting them. By this time, client apparatus (2) has read ahead and received the blocks in segment 4, which follows. Therefore, the server 11 synchronizes the count value of the transmit counter "Segment 4 - Client 2" of client apparatus (2) allocated to segment 4 to the count value of the transmit counter "Segment 4 - Client 1" of client apparatus (1), which has already begun counting the blocks in segment 4. Then, the server 11 restarts the transmit counter "Segment 2 - Client 2" and the transmit counter "Segment 5 - Client 1."

In this embodiment, the process of specifying the blocks in the segment (segment 3), which are being transmitted to client apparatus (1) when a transmit request is received from client apparatus (2), with the group address INF2 and transmitting them is extended. The blocks in the segments (segments 4 and 5) that have not been transmitted to client apparatus (1), excluding the segment (segment 3) that is being transmitted to client apparatus (1), are specified with the group addresses INF1 and INF2 and are transmitted. The blocks in the segments (segments 2 through 4) that have already been transmitted to client apparatus (1) are specified with the group address INF2 and re-transmitted. As a result, the number of blocks that must be transmitted to client apparatus (2), which subsequently requests the transmission of the same required information, can be smaller than that shown in the embodiment in FIG. 22. Therefore, the specified segments can be transmitted within a short time to a client apparatus that subsequently requests the transmission of the same required information. Moreover, the processing load on the information transmitting apparatuses and the load on the communication line can be reduced.

In the cases described above, the required information is transmitted to two client apparatuses. However, it is also possible to transmit the required information to three or more client apparatuses.

FIG. 24 shows what happens in a case in which client apparatus (1) has sent a transmit request REQ1 requesting the transmission of the required information starting with the first segment 1, and, while client apparatus (1) is receiving the blocks in segment 3, client apparatus (2) sends a transmit request REQ2 requesting the transmission of the same information starting with segment 1. Also, while segment 1 is still being transmitted to client apparatus (2), client apparatus (3) sends a transmit request REQ3 requesting the transmission of the same information starting with the first segment 1.

In the embodiment shown in FIG. 24, when the server 11 receives the transmit request REQ1 sent from client apparatus (1), it transmits a group address (e.g., group address INF1) to client apparatus (1). The server 11 then restarts the transmit counters "Segment 1-Client 1," "Segment 2 - Client 1," and "Segment 3 - Client 1" sequentially, and specifies the blocks in segments 1 through 3 with the group address INF1 and transmits them sequentially.

Client apparatus (1) receives and stores the group address INF1 transmitted from the server 11 and then receives and stores the blocks specified with the group address INF1.

Let us assume that, while the blocks in segment 3 are specified with the group address INF1 and are being transmitted, client apparatus (2) sends a transmit request REQ2.

When the server 11 receives the transmit request REQ2 sent from client apparatus (2), the server 11 restarts the transmit counter "Segment 1 - Client 2" of client apparatus (2) allocated to segment 1, which has already been transmitted to client apparatus (1). At the same time, the server 11 transmits a group address (e.g., group address INF2) to client apparatus (2).

Client apparatus (2) receives and stores the group address INF2 transmitted from the server 11. Client apparatus (2) also receives and stores the blocks specified with the group address INF2.

When the transmission of the blocks in segment 3 to client apparatus (1) is completed, the server 11 restarts the transmit counter "Segment 4 - Client 1" of client apparatus (1) allocated to segment 4, which is to be transmitted to client apparatus (1) next. At this time, the server 11 sends the group address INF1 of client apparatus (1) to client apparatus (2) in order to have client apparatus (2) read ahead and receive the blocks in segment 4, which are to be transmitted to client apparatus (1).

Client apparatus (2) receives and stores the group address INF1 transmitted from the server 11. Client apparatus (2) also receives and stores the blocks specified with the group address INF1 or INF2.

Let us assume that while the blocks in segment 1 are being transmitted to client apparatus (2), client apparatus (3) sends a transmit request REQ3 requesting the transmission of the same required information starting with the first segment 1.

When the server 11 receives the transmit request REQ3 from client apparatus (3) while specifying the blocks in segment 1 with the group address INF2 and transmitting the blocks to client apparatus (2), the server 11 restarts the transmit counter "Segment 1 - Client 3" of client apparatus (3) allocated to segment 1. At the same time, the server 11 transmits a group address (e.g., group address INF3) to client apparatus (3). At this time, the server 11 simultaneously transmits the blocks in segment 4 specified with the group address INF1 and the blocks in segment 1 specified with the group addresses INF2 and INF3.

Client apparatus (3) receives and stores the group address INF3 transmitted from the server 11. Client apparatus (3) also receives and stores the blocks specified with the group address INF3.

When the transmit counter "Segment 1 - Client 2" times out, the server 11 restarts the transmit counter "Segment 2 - Client 2" of client apparatus (2) allocated to segment 2, which is to be transmitted next to client apparatus (2). Here, since client apparatus (2) has already read ahead and received the blocks in segment 4, the server 11 synchronizes the count value of the transmit counter "Segment 4 - Client 2" of client apparatus (2) allocated to segment 4, to the count value of the transmit counter "Segment 4 - Client 1," which has already begun counting the blocks in segment 4. Additionally, since the transmit counter "Segment 1 - Client 3" has not timed out, the transmission of the blocks in segment 1 continues. Therefore, the server 11 simultaneously transmits the blocks in segment 4 specified with the group addresses INF1 and INF2, the blocks in segment 2 specified with the group addresses INF2, and the blocks in segment 1 specified with the group address INF3.

Furthermore, the server 11 sends the group address INF2 of client apparatus (2) to client apparatus (3) in order to have client apparatus (3) read ahead and receive the blocks in segment 2, which are to be transmitted to client apparatus (2).

Client apparatus (3) receives and stores the group address INF2 transmitted from the server 11 and then receives and stores the blocks specified with the group address INF2 or INF3.

When the transmit counters "Segment 4 - Client 1" and "Segment 4 - Client 2" time out, the server 11 restarts the transmit counters "Segment 5 - Client 1" and "Segment 5-Client 2" of client apparatuses (1) and (2) allocated to segment 5, which is to be transmitted next to client apparatuses (1) and (2). Therefore, the server 11 simultaneously transmits the blocks in segment 5 specified with the group addresses INF1 and INF2, the blocks in segment 2 specified with the group addresses INF2, and the blocks in segment 1 specified with the group address INF3.

Furthermore, the server 11 sends either the group address INF1 or INF2 (e.g., group address INF1) of client apparatus (1) or (2) to client apparatus (3) in order to have client apparatus (3) read ahead and receive the blocks in segment 5, which are to be transmitted to client apparatuses (1) and (2).

Client apparatus (3) receives and stores the group address INF1 transmitted from the server 11. In this case, client apparatus (3) receives and stores the blocks specified with the group address INF1, INF2, or INF3.

In this way, client apparatus (3) reads ahead and receives the blocks in segments 2 and 5. Therefore, when the transmit counter "Segment 1 - Client 3" times out, the server 11 synchronizes the count value of the transmit counter "Segment 2 - Client 3" of client apparatus (3) allocated to segment 2, to the count value of the transmit counter "Segment 2-Client 2," which has already begun counting the blocks in segment 2. Additionally, the server 11 synchronizes the count value of the transmit counter "Segment 5 - Client 3" of client apparatus (3) allocated to segment 5, to the count value of the transmit counter "Segment 5 - Client 1" or "Segment 5 - Client 2," which has already begun counting the blocks in segment 5.

As a result, the server 11 simultaneously transmits the blocks in segment 5 specified with the group addresses INF1, INF2, and INF3 and the blocks in segment 2 specified with the group addresses INF2 and INF3.

Thereafter, the server 11 transmits the blocks in segment 3 specified with the group addresses INF2 and INF3 and the blocks in segment 4 specified with the group address INF3.

In this embodiment as well, the number of blocks that must be transmitted to client apparatus (2) and client apparatus (3), which subsequently request the transmission of the same required information, is small. Therefore, the specified segments can be transmitted within a short time to client apparatuses that subsequently request the transmission of the same required information. Moreover, the processing load on the information transmitting apparatuses and the load on the communication line can be reduced.

In the explanation above, the blocks in each segment are transmitted sequentially. However, it is also possible to transmit multiple segments simultaneously if the client apparatus is capable of receiving multiple segments simultaneously. If the blocks in multiple segments can be simultaneously transmitted and received, the transfer time can be shortened even further.

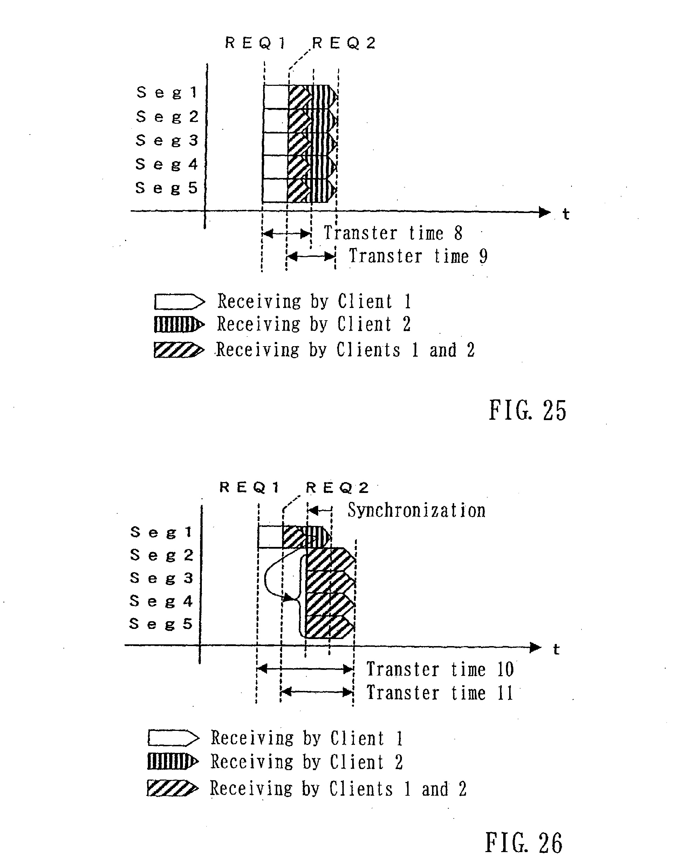

FIG. 25 shows a case in which client apparatuses can simultaneously receive segments 1 through 5, which comprise the required information.

In the embodiment shown in FIG. 25, client apparatus (1) sends to the server 11 the transmit request REQ1, requesting the transmission of the required information starting with the first segment 1.

When the server 11 receives the transmit request REQ1 sent from client apparatus (1), the server 11 transmits a group address (e.g., group address INF1) to client apparatus (1). The server 11 also restarts the transmit counter of client apparatus (1). Based on this, the server 11 specifies the blocks in segments 1 through 5 with the group address INF1 and transmits them simultaneously. If the total number of blocks is identical among the individual segments, only one transmit counter is needed. In contrast, if the number of blocks is different among the individual segments, it is preferable to provide a separate transmit counter for each client for each segment.

Client apparatus (1) receives and stores the blocks specified with the group address INF1.

Here, let us assume that, while the blocks in segments 1 through 5 are specified with the group address INF1 and are being transmitted, client apparatus (2) sends a transmit request REQ2, requesting the transmission of the same required information.

When the server 11 receives the transmit request REQ2 sent from client apparatus (2), the server 11 transmits a group address (e.g., group address INF2) to client apparatus (2). The server 11 also restarts the transmit counter of client apparatus (2). Based on this, the server 11 specifies the blocks in segments 1 through 5, which have not been transmitted to client apparatus (1), with the group addresses INF1 and INF2 and transmits them.

Client apparatus (2) receives and stores the group address INF2 transmitted from the server 11. Client apparatus (2) also receives and stores the blocks specified with the group address INF2.

When the count value of the transmit counter of client apparatus (1) corresponding to each segment (a common transmit counter if the total number of blocks are identical among the individual segments) matches the total number of blocks in each segment (i.e., the counter times out), the server 11 stops the process of specifying the blocks in that segment with the group address INF1 and transmitting them. At this time, since the count value in the transmit counter of client apparatus (2) corresponding to that segment does not match the total number of blocks in that segment (i.e., the counter has not timed out), the server 11 continues to transmit the blocks in that segment to client apparatus (2). That is, those blocks in that segment that have not yet been transmitted to client apparatus (2) are specified with the group address INF2 and are transmitted. Then, when the transmit counter of client apparatus (2) corresponding to that segment times out, the transmission of that segment is stopped.

This embodiment can shorten the time needed for transferring the required information to the client apparatus that is requesting the transmission of the information.

The transmission method shown in FIG. 26 is also possible. For example, when a transmit request REQ1 requesting the transmission of the required information comprising segments 1 through 5 starting with the first segment 1 is received from a client apparatus, the transmission method shown in FIG. 26 first transmits the blocks in the first segment 1 and, when the transmission of the blocks in segment 1 is completed, simultaneously transmits the blocks in the second segment 2 through the fifth segment 5.

FIG. 26 shows what happens in a case in which client apparatus (1) has sent a transmit request REQ1 requesting the transmission of the required information starting with the first segment 1, and, while the transmission of the blocks in segment 1 to client apparatus (1) is being specified, client apparatus (2) sends a transmit request REQ2 requesting the transmission of the same information starting with the first segment.

When the server 11 receives the transmit request REQ1 sent from client apparatus (1), the server 11 transmits a group address (e.g., group address INF1) to client apparatus (1). The server 11 also restarts the transmit counters of client apparatus (1) corresponding to the first segment 1. Based on this, the server 11 specifies the blocks in segment 1 with the group address INF1 and transmits them.

Client apparatus (1) receives and stores the group address INF1 transmitted from the server 11. Client apparatus (1) also receives and stores the blocks specified with the group address INF1.

Here, let us assume that while the blocks in segment 1 are specified with the group address INF1 and are being transmitted, client apparatus (2) sends a transmit request requesting the transmission of the same required information starting with the first segment 1.

Upon receiving the transmit request REQ2 from client apparatus (2), the server 11 transmits a group address (e.g., group address INF2) to client apparatus (2). Based on this, the server 11 specifies those blocks in segment 1 that have not yet been transmitted to client apparatus (1), with the group addresses INF1 and INF2 and transmits them.

Client apparatus (2) receives and stores the group address INF2 transmitted from the server 11. Client apparatus (2) also receives and stores the blocks specified with the group address INF2.

When the transmit counter of client apparatus (1) corresponding to segment 1 times out, the server 11 stops the process of specifying the blocks in segment 1 with the group address INF1 and transmitting them. The server 11 also restarts the transmit counters of the client apparatus corresponding to segments 2 through 5. At this time, the blocks that have already been transmitted to client apparatus (1) by the time the server 11 receives the transmit request REQ2 have not yet been transmitted to client apparatus (2). Consequently, the transmit counter of client apparatus (2) corresponding to segment 1 has not timed out. Therefore, the server 11 simultaneously transmits the blocks in segments 1 through 5 specified with the group address INF1, and the blocks in segment 1 specified with the group address INF2.

Furthermore, the server 11 sends the group address INF1 of client apparatus (1) to client apparatus (2) in order to have client apparatus (2) read ahead and receive the blocks that are to be transmitted to client apparatus (1).

Client apparatus (2) receives and stores the group address INF1 transmitted from the server 11. Based on this, client apparatus (2) receives and stores the blocks specified with the group address INF1 or INF2.

In this way, client apparatus (2) has read ahead and received the blocks in segments 2 through 5 specified with the group address INF1 of client apparatus (1). Therefore, when the transmit counter of client apparatus (2) corresponding to segment 1 times out, the server 11 synchronizes the count values of the transmit counters of client apparatus (2) corresponding to segments 2 through 5, to the count values of the transmit counters of client apparatus (1), which have already begun counting the blocks in segments 2 through 5. Based on this, the server 11 specifies those blocks in segments 2 through 5 that have not yet been transmitted to either client apparatus (1) or client apparatus (2), with the group address INF1 and INF2 and transmits them.

This embodiment can also shorten the time needed for transferring the required information to the client apparatus that is requesting the transmission of said information.

In the embodiments shown in FIGs. 25 and 26, the blocks in multiple segments are simultaneously transmitted only once. However, the number of segments to be simultaneously transmitted, the timing for simultaneous transmission, and the number of simultaneous transmissions can be modified as desired.

Next, various methods can be used for transmitting the blocks in each segment. For example, a method can be used that transmits the blocks in each segment in a single batch. For example, blocks 1 through 3 from segment 1, blocks 4 through 6 from segment 2, and blocks 7 through 9 from segment 3 can be transmitted in that order. Alternatively, a method can be used that transmits segment blocks one at a time. For example, block 1 from segment 1, block 4 from segment 2, and block 7 from segment 3 can be transmitted in that order.

In the aforementioned embodiments, the speed at which the blocks from each segment are transmitted is fixed. However, it is possible to make the transmission speed for each segment adjustable. If the number of client apparatuses that request the transmission of the required information is small, the possibility that the blocks in all segments might be transmitted simultaneously is small. However, if multiple client apparatuses request the transmission of the required information at independent timings, the possibility that the blocks in all segments might be transmitted simultaneously will increase. Under such a circumstance, it is possible to shorten the wait time for client apparatuses by adjusting the transmission speeds of the blocks of all segments such that they add up to a predetermined value. Therefore, if access is concentrated in certain information segments, such as the beginning of the information, segments that are viewed at higher frequencies, or points in the information where playback begins after skipping, setting a high transmission speed for these segments can shorten the wait time that occurs before playback can begin.

Note that the group addresses to be transmitted to client apparatuses can be the same as, or different from, each other. The server's operation in transmitting the same group address to multiple client apparatuses is the same as described above, except for the fact that the blocks in each segment are transmitted by specifying the common group address that is set for the multiple client apparatuses.

Each client apparatus executes a receiving process for receiving the necessary blocks from among the blocks that are being transmitted to a network. For example, based on the information included in each block packet, each client apparatus determines whether it has received all of the blocks included in a given segment that was requested. Upon determining that it has received all of the blocks included in a given segment that was requested, the client apparatus executes a receiving process for the blocks included in another segment. At this time, if multiple blocks included in multiple segments are being simultaneously transmitted to the network, multiple blocks are received simultaneously in the manner described above. Then, when the client apparatus determines that it has received all segments that were requested, the client apparatus stops receiving the blocks comprising the segments.

Even when transmitting the same group address to the individual client apparatuses, the server in this embodiment executes the same operation as described above. Therefore, each client apparatus can start receiving the requested segment immediately after requesting transmission. Furthermore, the client apparatus can within a short time receive the next segment that follows the segment currently being received. During this time, because the blocks included in each segment are transmitted using the multicast method, the processing load on the server and the load on the network (communication line) do not increase.

In the aforementioned embodiments, a group address is transmitted to each client apparatus when a transmit request is sent from each client apparatus. However, it is also possible to allocate group addresses to the individual client apparatuses in advance. The group addresses to be allocated to the individual client apparatuses in advance can be the same as, or different from, each other. In this case, there is no need for the server to transmit group addresses to the individual client apparatuses.

The following representative advantageous effects may be obtained by utilizing the present teachings.

The load on the server and the network can be reduced by providing (1) a server apparatus that uses the multicast method to transmit a block once via the network and (2) a client apparatus that receives blocks in sequence, beginning with the block that the client apparatus can receive at that time.

Further, while the server is transmitting the designated information to a certain client apparatus, if there is a request to transmit the information from another client apparatus, the other client apparatus can receive the information within a short wait time.

In addition, when the server is required to re-transmit a certain block, the load on the network can be minimized by simultaneously performing the retransmission process and the normal transmission processes. In other words, when the server receives a retransmit request for an arbitrary block from an arbitrary client apparatus, the server simultaneously transmits the block to the client apparatus that sent a usual transmit request and to the client apparatus that sent the retransmit request. If re-transmission process is performed as a part of the usual transmitting process, the load on the network will not increase, even if the number of required re-transmissions increases.

Naturally, a variety of other modifications, additions, and deletions are possible for the present teachings.

For example, although the subdivision sequence information of each block is transmitted in the above representative embodiment, it is not required to always transmit the subdivision sequence information of each block. For example, if the total number of blocks that comprise the information, the first block, and the last block are known, it is possible to reconstitute the information.

Further, although the representative embodiment utilized a single server, it is also possible to utilize a plurality of servers. Moreover, although the representative embodiment concerned a client-server communication system, the present teachings also can be employed in other types of communication systems. In addition, the method for setting the group affiliation of each client apparatus can be changed as desired. For example, instead of determining the group address of a client apparatus whenever a transmit request has been received from the client apparatus, it is also acceptable to pre-set the group address of each client apparatus in advance. In this case, the transmission of a group address from the server to each client apparatus is not necessary.

Furthermore, the various methods described in this Specification can be used alone or in any combination of multiple methods in all embodiments.

In sum, a list of some of the functions of both the sever 11 and clients 1 is provided:

Certain Functions Provided By Client 1 (i.e., Information Receiving Apparatus)

(1) sends a transmit request for transmitting the designated information (content);

(2) receives the blocks subdivided from the designated information by using the multicast method by the communication device;

(3) stores each block in the storage device with the subdivision sequence information;

(4) reads each block from the storage device with reference to the subdivision sequence information;

(5) detects the error (missing block) by using the subdivision sequence information or the error detection/correction information;

(6) stores the management information in the receiving management table;

(7) sends a retransmit request for retransmitting blocks;

Certain Functions Of The Server 11 (i.e., The Information Transmitting Apparatus)

(1) transmits the designated information (content) in response to receiving a request for transmitting the designated information from the client (the information receiving apparatus);

(2) transmits the information by using the IP multicast method by the communication device;

(3) transmits blocks subdivided from the designated information (content);

(4) cyclically transmits the blocks as long as requests for transmitting the designated information are received from information receiving apparatuses prior to transmitting all blocks comprising the designated information;

(5) stores blocks subdivided from the information (content) in the storage device;

(6) reads blocks from the storing device and transmits blocks;

(7) transmits blocks together with a subdivision sequence information;

(8) appends the error detection/correction information to each block;

(9) sets the network;

(10) controls the bandwidth (quantity of data transmitted from the client per unit time);

(11) transmits information (content) supplied from an external device;

(12) retransmits information in response to receiving a retransmit request;

(13) retransmits information by using IP multicast method;

(14) retransmits information by using unicast method;

(15) selects a retransmission method based upon the status of the network.

The various elements used in the preferred embodiments will be shown below.

Client side

Storage device 8

Communication device 6

Processing device 7

Receiving management table 5

Client apparatus

Server side

Storage device 12a

Storage device 12b

Information supply device 9

Communication device 14

Processing device 13

Server

## Claims

1. A communication apparatus provided with a communication line, at least one information transmitting apparatus connected to the communication line, and at least a first and a second information receiving apparatuses connected to the communication line, wherein the information transmitting apparatus, in response to a transmit request from the first or second information receiving apparatus, transmits the blocks resulting from subdividing the information whose transmission was requested to the first or second information receiving apparatus that requested transmission, and wherein,
if the information transmitting apparatus receives a transmit request for the required information from the second information receiving apparatus while transmitting the blocks resulting from subdividing the required information to the communication line by specifying the group address that has been set for the first information receiving apparatus in response to a transmit request for the required information from the first information receiving apparatus, the information transmitting apparatus transmits to the communication line the blocks that have not yet been transmitted to the first information receiving apparatus by specifying the group addresses that have been set for the first and second information receiving apparatuses and the blocks that have already been sent to the first information receiving apparatus by specifying the group address that has been set for the second information receiving apparatus, and
the first and second information receiving apparatuses send transmit requests to the information transmitting apparatus receive from the communication lines those blocks that are specified with the group addresses matching their own group addresses, and store these blocks.

2. The communication apparatus according to Claim 1, wherein
the information transmitting apparatus transmits to the communication line the blocks resulting from subdividing the required information and the subdivision sequence information indicating the sequence of the individual blocks, and
the information receiving apparatuses reconstruct the information based on the blocks received from the communication line and the subdivision sequence information for the individual blocks.

3. The communication apparatus according to Claim 1, wherein
the information transmitting apparatus continues to cyclically transmit the blocks resulting from subdividing the required information according to a predetermined sequence as long as the information transmitting apparatus keeps receiving transmit requests from other information receiving apparatuses for the required information before transmitting all of the blocks resulting from subdividing the required information to the information receiving apparatus that requested the transmission of the required information.

4. The communication apparatus according to Claim 1,
provided with a storage device for storing the blocks resulting from subdividing the required information, wherein
the information transmitting apparatus reads blocks from the storage device according to a predetermined sequence and transmits thethe blocks to the communication line.

5. The communication apparatus according to Claim 1,
provided with an information supply device for supplying the required information, wherein the information transmitting apparatus transmits to the communication line the blocks resulting from subdividing the required information supplied from the information supply device and the subdivision sequence information indicating the sequence of the individual blocks.

6. The communication apparatus according to Claim 5, wherein
the information transmitting apparatus stores in the storage device the blocks resulting from subdividing the required information supplied from the information supply device and the subdivision sequence information indicating the sequence of the individual blocks according to a predetermined sequence, and when the information transmitting apparatus receives a transmit request for the required information supplied from the information supply device, the information transmitting apparatus reads the individual blocks and the subdivision sequence information from the storage device according to the predetermined sequence and transmits them to the communication line.

7. The communication apparatus according to Claim 5, wherein
the information transmitting apparatus stores in the storage device the blocks resulting from subdividing the required information supplied from the information supply device and the subdivision sequence information indicating the sequence of the individual blocks and, when the information transmitting apparatus receives a transmit request for the required information supplied from the information supply device, the information transmitting apparatus reads the individual blocks and the subdivision sequence information from the storage device according to the sequence indicated by the subdivision sequence information and transmits the blocks to the communication line.

8. The communication apparatus according to Claim 1, wherein
the information transmitting apparatus adds error detection/correction information to the blocks before transmitting the blocks, and
the information receiving apparatus detects and corrects errors based on the error detection/correction information received along with the blocks.

9. The communication apparatus according to Claim 2, wherein
the information receiving apparatus determines whether the blocks have been received correctly, based on the subdivision sequence information for the individual blocks.

10. The communication apparatus according to Claim 1, wherein
the information transmitting apparatus, upon receiving a retransmit request from the information receiving apparatus, transmits the blocks requested for retransmission to the information receiving apparatus that requested its retransmission, and
the information receiving apparatus sends a retransmit request to the information transmitting apparatus and receives and stores the blocks that have been retransmitted from the information transmitting apparatus.

11. The communication apparatus according to Claim 10, provided with
a transmission storage device for storing the blocks to be transmitted and a retransmission storage device for storing the blocks to be retransmitted, and wherein
the information transmitting apparatus, upon receiving a transmit or retransmit request, reads the blocks from the transmission or retransmission storage device, respectively.

12. The communication apparatus according to Claim 10, wherein
the information transmitting apparatus, upon receiving a retransmit request from the information receiving apparatus, transmits all of the blocks comprising the requested information to the communication line.

13. The communication apparatus according to Claim 10, wherein
the information transmitting apparatus, upon receiving a retransmit request from the information receiving apparatus, decides whether to transmit the blocks requested for retransmission by specifying the address that has been set for the information receiving apparatus that sent the retransmit request or to transmit to the communication line the blocks requested for retransmission by specifying the group address that has been set for the information receiving apparatus that sent the retransmit request, based on the assessment of the band usage status of the communication line.

14. The communication apparatus according to Claim 13, wherein
the information transmitting apparatus assesses the band usage status of the communication line by comparing the number of blocks requested for retransmission and a limit value.

15. The communication apparatus according to Claim 13, wherein
the information transmitting apparatus communicates the assessment result to the information receiving apparatus that sent the retransmit request, and
the information receiving apparatus selects the method to use for receiving the blocks requested for retransmission based on the assessment result communicated from the information transmitting apparatus.

16. The communication apparatus according to Claim 1, wherein
the information transmitting apparatus adjusts the number of blocks to be transmitted to the communication line such that the data volume on the communication line within a predetermined time is at or below a predetermined volume.

17. The communication apparatus according to Claim 1, wherein
the information transmitting apparatus, upon receiving a transmit request from the first or second information receiving apparatus, transmits the group address that has been set for the first or second information receiving apparatus to the first or second information receiving apparatus, and
the first or second information receiving apparatus stores the group address that has been transmitted from the information transmitting apparatus as its own group address.

18. The communication apparatus according to Claim 1, wherein
the information transmitting apparatus, upon receiving a transmit request from the first or second information receiving apparatus, sets the communication line such that the blocks to be transmitted from the information transmitting apparatus will reach the first or second information receiving apparatus that sent the transmit request.

19. A communication apparatus provided with at least one information transmitting apparatus that sequentially transmits the blocks resulting from subdividing the required information requested for transmission in response to a transmit request sent from an information receiving apparatus and at least a first and a second information receiving apparatuses that send transmit requests and receive the individual blocks that have been transmitted from the information transmitting apparatus, wherein
the information transmitting apparatus, upon receiving a transmit request sent from the first information receiving apparatus, sequentially transmits the blocks resulting from subdividing the required information whose transmission is requested by specifying the predetermined group addresses that have been set for the first and second information receiving apparatuses, and, if the information transmitting apparatus receives a transmit request from the second information receiving apparatus before completing the transmission of all of the blocks resulting from subdividing the required information, the information transmitting apparatus continues to transmit the individual blocks until the information transmitting apparatus has finished transmitting all of the blocks resulting from subdividing the required information after receiving the transmit request from the second information receiving apparatus, and the first and second information receiving apparatuses receive and store the blocks specified with the group addresses that match their own preset group addresses until the number of the blocks match the total number of blocks resulting from subdividing the required information whose transmission was requested.

20. The communication apparatus according to Claim 19, wherein
the information transmitting apparatus, upon receiving a transmit request sent from the first or second information receiving apparatus, transmits the total number of blocks resulting from subdividing the required information whose transmission was requested to the first or second information receiving apparatus that sent the transmit request, and the first and second information receiving apparatuses receive blocks based on the total number of blocks resulting from subdividing the required information.

21. The communication apparatus according to Claim 19, wherein
the information transmitting apparatus transmits the subdivision sequence information, which indicates the sequence of the individual blocks, and
the information receiving apparatuses receive blocks based on the subdivision sequence information of the individual blocks.

22. A communication method that transmits from an information transmitting apparatus to a communication line the blocks resulting from subdividing the requested information in response to a transmit request sent from an information receiving apparatus connected to the communication line by specifying the group address that has been set for the information receiving apparatus that sent the transmit request, comprising:
transmitting from the information transmitting apparatus to the communication line the blocks resulting from subdividing the requested information in response to a transmit request sent from a first information receiving apparatus for the required information by specifying the group address that has been set for the first information receiving apparatus; and
transmitting from the information transmitting apparatus to the communication line the blocks that have not been transmitted to the first information receiving apparatus by specifying the group addresses that have been set for the first and second information receiving apparatuses, and the blocks that have already been transmitted to the first information receiving apparatus by specifying the group address that has been set for the second information receiving apparatus, if the information transmitting apparatus receives a transmit request for the required information from a second information receiving apparatus while transmitting the blocks resulting from subdividing the requested information to the first information receiving apparatus.

23. An information transmission method that transmits information from an information transmitting apparatus to an information receiving apparatus by specifying the group address that has been set for the information receiving apparatus, comprising:
transmitting from the information transmitting apparatus the blocks resulting from subdividing the requested information in response to a transmit request sent from a first information receiving apparatus for the required information by specifying the group address that has been set for the first information receiving apparatus, and
transmitting from the information transmitting apparatus the blocks that have not been transmitted to the first information receiving apparatus by specifying the group addresses that have been set for the first and second information receiving apparatuses, and the blocks that have already been transmitted to the first information receiving apparatus by specifying the group address that has been set for the second information receiving apparatus, if a transmit request for the required information is received from a second information receiving apparatus before all of the blocks resulting from subdividing the requested information have been transmitted to the first information receiving apparatus.

24. The information transmission method according to Claim 23, which transmits from the information transmitting apparatus the blocks along with the subdivision sequence information, which indicates the block sequence.

25. A communication method for transmitting at least first and second segments containing blocks that are obtained by subdividing and grouping information from an information transmitting apparatus to at least a first and a second information receiving apparatuses comprising:
while transmitting from the information transmitting apparatus those blocks included in the first segment that have not yet been transmitted to the first information receiving apparatus, by specifying the group address that has been set for the first information receiving apparatus, also specifies the group address that has been set for the second information receiving apparatus, if a transmit request is received from a second information receiving apparatus, requesting transmission starting with the first segment, while sequentially transmitting from the information transmitting apparatus the blocks included in segment 1 by specifying the group address that has been set for the first information receiving apparatus, in response to a transmit request received from the first information receiving apparatus,
sequentially transmitting from the information transmitting apparatus those blocks included in the first segment that have not yet been transmitted to the second information receiving apparatus, by specifying the group address that has been set for the second information receiving apparatus, in response to the transmission completion of all of the blocks included in the first segment to the first information receiving apparatus and for sequentially transmitting from the information transmitting apparatus those blocks included in the second segment by specifying the group address that has been set for the first information receiving apparatus,
a step that, when transmitting from the information transmitting apparatus the blocks included in the second segment, by specifying the group address that has been set for the first information receiving apparatus, in response to the transmission completion of all of the blocks included in the first segment to the second information receiving apparatus, also specifies the group address that has been set for the second information receiving apparatus, and
making the second information receiving apparatus receive the blocks specified with the group address that has been set for the first information receiving apparatus between the time when all of the blocks included in the first segment have been transmitted to the first information receiving apparatus and the time when all of the blocks included in the first segment are transmitted to the second information receiving apparatus.

26. The information transmission method according to Claim 25, wherein,
by transmitting the group address that has been set for the first information receiving apparatus to the second information receiving apparatus from the information transmitting apparatus, making the second information receiving apparatus receive the blocks specified with the group address that has been set for the first information receiving apparatus between the time when all of the blocks included in the first segment have been transmitted to the first information receiving apparatus and the time when all of the blocks included in the first segment are transmitted to the second information receiving apparatus.

27. The information transmission method according to Claim 25, wherein,
by transmitting the blocks included in the second segment from the information transmitting apparatus by specifying the group addresses that have been set for the first and second information receiving apparatuses, making the second information receiving apparatus receive the blocks specified with the group address that have been set for the first information receiving apparatus between the time when all of the blocks included in the first segment have been transmitted to the first information receiving apparatus and the time when all of the blocks included in the first segment are transmitted to the second information receiving apparatus.

28. A communication apparatus provided with at least one information transmitting apparatus that sequentially transmits the blocks included in the segment requested for transmission in response to a transmit request and at least a first and a second information receiving apparatuses that receive the individual blocks that have been transmitted from the information transmitting apparatus, wherein,
if the information transmitting apparatus receives a transmit request from the second information receiving apparatus requesting transmission starting with the first segment while sequentially transmitting the blocks included in the first segment by specifying the group addresses that have been set for the first and second information receiving apparatuses in response to a transmit request sent from the first information receiving apparatus, the information transmitting apparatus continues transmitting the blocks included in the first segment until all of these blocks included in the first segment have been transmitted after receiving the transmit request from the second information receiving apparatus, and, when the information transmitting apparatus has finished transmitting all of the blocks included in the first segment after starting to transmit the blocks included in the first segment, the information transmitting apparatus sequentially transmits the blocks included in the second segment by specifying a predetermined group address, and
the first and second information receiving apparatuses receive and store the blocks in the segments specified with the group addresses that match their own preset group addresses until the number of these blocks match the total number of blocks included in the segments.

29. The communication apparatus according to Claim 28, wherein
the information transmitting apparatus transmits the total count of the blocks included in each segment to the first and second information receiving apparatuses, and
the first and second information receiving apparatuses receive the blocks in each segment based on the total count of the blocks included in each segment.

30. A communication apparatus provided with at least one information transmitting apparatus that sequentially transmits the blocks included in the segment requested for transmission in response to a transmit request and at least a first and a second information receiving apparatuses that receive the individual blocks that have been transmitted from the information transmitting apparatus, wherein,
if the information transmitting apparatus receives a transmit request requesting the transmission of segments starting with the second segment, which is ahead of the first segment, from the second information receiving apparatus while sequentially transmitting the blocks included in the first segment by specifying the group address that has been set for the first information receiving apparatus in response to a transmit request sent from the first information receiving apparatus, the information transmitting apparatus continues the process of transmitting the blocks included in the first segment by specifying the group address that has been set for the first information receiving apparatus, sequentially transmits the blocks included in the second through the first segments by specifying the group address that has been set for the second information receiving apparatus, and when the information transmitting apparatus has finished transmitting all of the blocks included in the first segment by specifying the group address that has been set for the first information receiving apparatus, the information transmitting apparatus sequentially transmits, segment by segment, the blocks included in the segment that follows the first segment by specifying the group addresses that have been set for the first and second information receiving apparatuses, and the first and second information receiving apparatuses receive and store the blocks specified with the group addresses that match their own preset group addresses.

31. A communication apparatus provided with at least an information transmitting apparatus that sequentially transmits the blocks included in the segment requested for transmission in response to a transmit request and at least a first and a second information receiving apparatuses that receive the individual blocks that have been transmitted from the information transmitting apparatus, wherein;
if the information transmitting apparatus receives a transmit request requesting the transmission of segments starting with the second segment, which is ahead of the first segment, from the second information receiving apparatus while sequentially transmitting the blocks included in the first segment by specifying the group addresses that have been set for the first and second information receiving apparatuses in response to a transmit request sent from the first information receiving apparatus, the information transmitting apparatus continues the process of transmitting the blocks included in the first segment by specifying the group addresses that have been set for the first and second information receiving apparatuses, and, when the information transmitting apparatus has finished transmitting all of the blocks included in the second through the first segments by specifying the group addresses that have been set for the first and second information receiving apparatuses, the information transmitting apparatus sequentially transmits, segment by segment, the blocks included in the segment that follows the first segment by specifying the group addresses that have been set for the first and second information receiving apparatuses, and
the first and second information receiving apparatuses receive and store the blocks in the segments specified with the group addresses that match their own preset group addresses until the number of these blocks match the total number of blocks included in the segments.
